# EUROPEAN PATENT SPECIFICATION

(11) **EP 2 835 510 B1**
(45) Date of publication and mention of the grant of the patent: **21.09.2016**
(21) Application number: 14172002.9
(22) Date of filing: 11.06.2014
(51) Int. Cl.: F01N 3/20, F01N 3/08

(54) **Exhaust purification system of internal combustion engine**
Abgasreinigungssystem für einen Verbrennungsmotor
Système de purification de gaz d'échappement d'un moteur à combustion interne

(30) Priority: 08.08.2013 JP 2013165350
(43) Date of publication of application: 11.02.2015
(73) Proprietor: TOYOTA JIDOSHA KABUSHIKI KAISHA, Toyota-shi, Aichi-ken, 471-8571 (JP)
(72) Inventor: Bisaiji, Yuki, Toyota-shi, Aichi-ken, 471-8571 (JP); Yoshida, Kohei, Toyota-shi, Aichi-ken, 471-8571 (JP)
(74) Representative: Kuhnen & Wacker

(56) References cited:
- EP-A2- 2 441 934
- DE-A1-102008 005 989
- DE-A1-102011 056 755

## Description

### Technical Field

The present invention relates to an exhaust purification system of an internal combustion engine.

### Background Art

In an internal combustion engine in which an NO_{X} purification catalyst is arranged in an engine exhaust passage, a urea water feed valve for feeding urea water is arranged in the engine exhaust passage upstream of the NOx purification catalyst, and an electric pump for pumping urea water to the urea water feed valve is provided, the electric pump usually starts to be driven while the NOx purification catalyst is low in temperature so as to be able to immediately feed urea water when there is a demand to feed urea water. However, the urea water actually starts to be fed after the temperature of the NO_{X} purification catalyst becomes high to a certain degree. Therefore, if starting to drive the electric pump while the NOx purification catalyst is low in temperature in this way, the problem arises that the electrical energy for driving the electric pump is wastefully consumed. Therefore, known in the art is an internal combustion engine which is designed to prevent wasteful consumption of electrical energy by starting to drive the electric pump after the NOx purification catalyst becomes sufficiently high in temperature (for example, see JP 2010-101262 A).

Another exhaust purification system of internal combustion engine is known from EP 2 441 934 A2. There, an exhaust purifying catalyst is provided in an exhaust passage for the engine and a fuel adding valve is provided in the exhaust passage at a position upstream of the exhaust purifying catalyst. The exhaust gas purification apparatus includes anti-clog means for causing the fuel adding valve to perform anti-clog fuel addition for injecting fuel to prevent clogging of the fuel adding valve. The exhaust gas purification apparatus further comprises: catalyst activation estimation means for estimating if the exhaust purifying catalyst is in an activated state or not, wherein, in a situation where the anti-clog fuel addition should be conducted, if the catalyst activation estimation means estimates that the exhaust purifying catalyst has not been activated, the anti-clog means performs reduction control in which a fuel addition amount per unit time is restricted or the anti-clog fuel addition is prohibited until the exhaust purifying catalyst is activated

### Summary of Invention

### Technical Problem

On the other hand, when arranging a reducing agent feed valve for feeding a reducing agent such as urea water in an engine exhaust passage in this way, if the feed of reducing agent from the reducing agent feed valve is stopped, the particulate matter etc. which is contained in the exhaust gas are deposited on the nozzle opening of the reducing agent feed valve and, as a result, the nozzle opening of the reducing agent feed valve becomes clogged. Therefore, to prevent the nozzle opening of the reducing agent feed valve from clogging when the feed of reducing agent from the reducing agent feed valve is stopped, it is desirable to intermittently feed a small amount of reducing agent. However, in this case, if continuing to drive the electric pump to supply a small amount of reducing agent, the problem arises that a large amount of electrical energy is wastefully consumed for driving the electric pump.

An object of the present invention is to provide an exhaust purification system of an internal combustion engine which is designed to greatly reduce the amount of consumption of electrical energy for driving an electric pump when preventing a nozzle opening of a reducing agent feed valve from clogging.

### Solution to Problem

That is, according to the present invention, there is provided an exhaust purification system of an internal combustion engine as set forth in claim 1, comprising a reducing agent feed valve arranged in an engine exhaust passage, a reducing agent injection control device for controlling an action of injection of a reducing agent from the reducing agent feed valve, an electric pump for supplying a reducing agent to the reducing agent feed valve, and an electric pump drive control device for controlling a drive operation of the electric pump, wherein the reducing agent injection control device is designed such that an amount of reducing agent which is required for exhaust treatment is intermittently injected from the reducing agent feed valve, and, when an injection pressure of the reducing agent feed valve falls due to an injection of the reducing agent, the injection pressure of the reducing agent feed valve is raised by the electric pump to a target injection pressure which enables the amount of reducing agent required for exhaust treatment to be injected. The reducing agent injection control device is further designed such that said reducing agent injection control device performs, in addition to a control of injecting reducing agent in an amount which is required for exhaust treatment, a control of injection for preventing clogging which prevents clogging of a nozzle opening of the reducing agent feed valve by intermittently injecting a smaller amount of reducing agent from the reducing agent feed valve compared with the amount of reducing agent which is required for exhaust treatment. Characterized in that the electric pump drive control device is designed such that it stops the electric pump when there is a demand to stop the electric pump during engine operation, and that said reducing agent injection control device is designed such that, when the electric pump is stopped, the reducing agent injection control device intermittently injects the amount of reducing agent which is required for preventing clogging in the state where the electric pump is stopped until the injection pressure of the reducing agent feed valve falls below a predetermined allowable injection pressure which is lower compared with the target injection pressure or a number of injections from the reducing agent feed valve after the electric pump stops becomes a predetermined number of injections or more. Advantageous Effects of Invention

The amount of reducing agent which is required for preventing clogging of the nozzle opening of the reducing agent feed valve is injected in the state where the electric pump is stopped, so it is possible to reduce the amount of consumption of electrical energy for driving the electric pump.

### Brief Description of Drawings

[FIG. 1] FIG. 1 is an overall view of a compression ignition type internal combustion engine.
[FIG. 2] FIG. 2 is a view which schematically shows the surface part of a catalyst carrier.
[FIG. 3] FIG. 3 is a view for explaining an oxidation reaction at an exhaust purification catalyst.
[FIG. 4] FIG. 4 is a view which shows changes in an air-fuel ratio of exhaust gas which flows into an exhaust purification catalyst.
[FIG. 5] FIG. 5 is a view which shows an NO_{X} purification rate R1.
[FIG. 6] FIGS. 6A and 6B are views for explaining an oxidation reduction reaction in an exhaust purification catalyst.
[FIG. 7] FIGS. 7A and 7B are views for explaining an oxidation reduction reaction in an exhaust purification catalyst.
[FIG. 8] FIG. 8 is a view which shows changes in an air-fuel ratio of exhaust gas which flows into an exhaust purification catalyst.
[FIG. 9] FIG. 9 is a view which shows an NOx purification rate R2.
[FIG. 10] FIG. 10 is a view which shows a relationship between a vibration period ΔT of hydrocarbon concentration and an NOx purification rate R1.
[FIG. 11] FIGS. 11A and 11B are views which show maps of the injection amount of hydrocarbons etc.
[FIG. 12] FIG. 12 is a view which shows an NO_{X} release control.
[FIG. 13] FIG. 13 is a view which shows a map of an exhausted NO_{X} amount NOXA.
[FIG. 14] FIG. 14 is a view which shows a fuel injection timing.
[FIG. 15] FIG. 15 is a view which shows a map of an additional hydrocarbon feed amount WR.
[FIG. 16] FIG. 16 is a view which shows a fuel injection control device.
[FIG. 17] FIG. 17 is a view which shows a change in the pressure PX of fuel fed into a hydrocarbon feed valve, etc.
[FIG. 18] FIG. 18 is a view which shows a change in the pressure PX of fuel fed into a hydrocarbon feed valve, etc.
[FIG. 19] FIG. 19 is a view which shows the relationship between a catalyst temperature TC and a pump-use ECU operation flag.
[FIG. 20] FIG. 20 is a flow chart for controlling a pump-use ECU operation flag.
[FIG. 21] FIG. 21 is a flow chart for performing a clogging prevention control.
[FIG. 22] FIG. 22 is a flow chart of another embodiment for performing a clogging prevention control.
[FIG. 23] FIG. 23 is a flow chart for performing an injection control.
[FIG. 24] FIG. 24 is a view which shows the relationship between a catalyst temperature TC and a pump-use ECU operation flag.
[FIG. 25] FIG. 25 is a flow chart for controlling a pump-use ECU operation flag.
[FIG. 26] FIG. 26 is a flow chart for performing a clogging prevention control.
[FIG. 27] FIG. 27 is a flow chart for performing a NOx purification control.

### Description of Embodiments

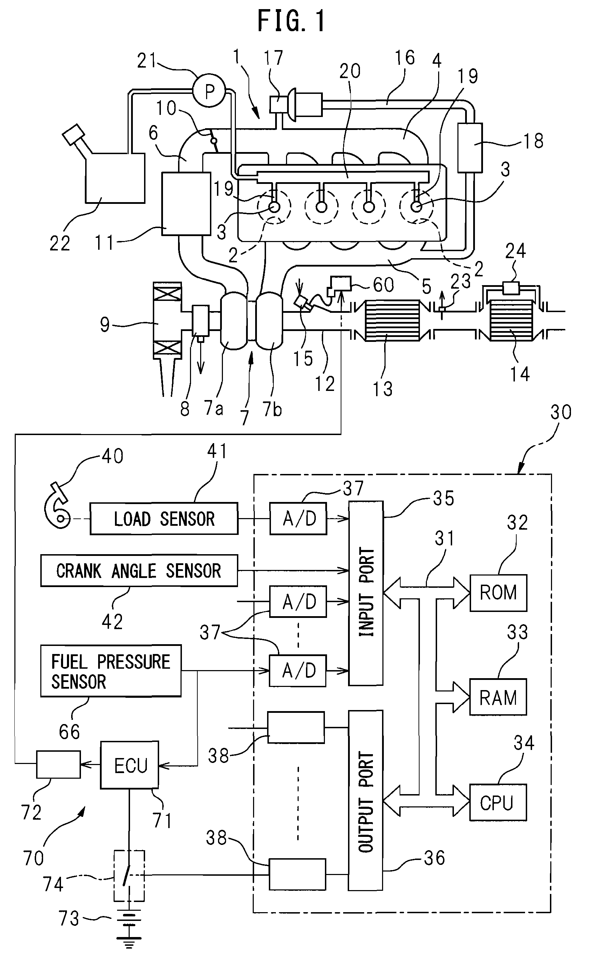

FIG. 1 is an overall view of a compression ignition type internal combustion engine.

Referring to FIG. 1, 1 indicates an engine body, 2 a combustion chamber of each cylinder, 3 an electronically controlled fuel injector for injecting fuel into each combustion chamber 2, 4 an intake manifold, and 5 an exhaust manifold. The intake manifold 4 is connected through an intake duct 6 to an outlet of a compressor 7a of an exhaust turbocharger 7, while an inlet of the compressor 7a is connected through an intake air amount detector 8 to an air cleaner 9. Inside the intake duct 6, a throttle valve 10 which is driven by an actuator is arranged. Around the intake duct 6, a cooling device 11 is arranged for cooling the intake air which flows through the inside of the intake duct 6. In the embodiment which is shown in FIG. 1, the engine cooling water is guided to the inside of the cooling device 11 where the engine cooling water is used to cool the intake air.

On the other hand, the exhaust manifold 5 is connected to an inlet of an exhaust turbine 7b of the exhaust turbocharger 7, and an outlet of the exhaust turbine 7b is connected through an exhaust pipe 12 to an inlet of an exhaust purification catalyst 13. In an embodiment of the present invention, this exhaust purification catalyst 13 is comprised of an NOx storage catalyst. An outlet of the exhaust purification catalyst 13 is connected to a particulate filter 14 and, upstream of the exhaust purification catalyst 13 inside the exhaust pipe 12, a hydrocarbon feed valve 15 is arranged for feeding hydrocarbons comprised of diesel oil or other fuel used as fuel for a compression ignition type internal combustion engine. In the embodiment shown in FIG. 1, diesel oil is used as the hydrocarbons which are fed from the hydrocarbon feed valve 15. Note that, the present invention can also be applied to a spark ignition type internal combustion engine in which fuel is burned under a lean air-fuel ratio. In this case, from the hydrocarbon feed valve 15, hydrocarbons comprised of gasoline or other fuel used as fuel of a spark ignition type internal combustion engine are fed.

On the other hand, the exhaust manifold 5 and the intake manifold 4 are connected with each other through an exhaust gas recirculation (hereinafter referred to as an "EGR") passage 16. Inside the EGR passage 16, an electronically controlled EGR control valve 17 is arranged. Further, around the EGR passage 16, a cooling device 18 is arranged for cooling the EGR gas which flows through the inside of the EGR passage 16. In the embodiment which is shown in FIG. 1, the engine cooling water is guided to the inside of the cooling device 18 where the engine cooling water is used to cool the EGR gas. On the other hand, each fuel injector 3 is connected through a fuel feed tube 19 to a common rail 20. This common rail 20 is connected through an electronically controlled variable discharge fuel pump 21 to a fuel tank 22. The fuel which is stored inside of the fuel tank 22 is fed by the fuel pump 21 to the inside of the common rail 20. The fuel which is fed to the inside of the common rail 21 is fed through each fuel feed tube 19 to the fuel injector 3.

An electronic control unit 30 is comprised of a digital computer provided with a ROM (read only memory) 32, a RAM (random access memory) 33, a CPU (microprocessor) 34, an input port 35, and an output port 36, which are connected with each other by a bidirectional bus 31. Downstream of the exhaust purification catalyst 13, a temperature sensor 23 is arranged for detecting the temperature of the exhaust gas flowing out from the exhaust purification catalyst 13, and a pressure difference sensor 24 for detecting a pressure difference before and after the particulate filter 14 is attached to the particulate filter 14. The output signals of these temperature sensor 23, pressure difference sensor 24 and intake air amount detector 8 are input through respectively corresponding AD converters 37 to the input port 35. Further, an accelerator pedal 40 has a load sensor 41 connected to it which generates an output voltage proportional to the amount of depression L of the accelerator pedal 40. The output voltage of the load sensor 41 is input through a corresponding AD converter 37 to the input port 35. Furthermore, at the input port 35, a crank angle sensor 42 is connected which generates an output pulse every time a crankshaft rotates by, for example, 15°. On the other hand, the output port 36 is connected through corresponding drive circuits 38 to each fuel injector 3, the actuator for driving the throttle valve 10, hydrocarbon feed valve 15, EGR control valve 17, and fuel pump 21.

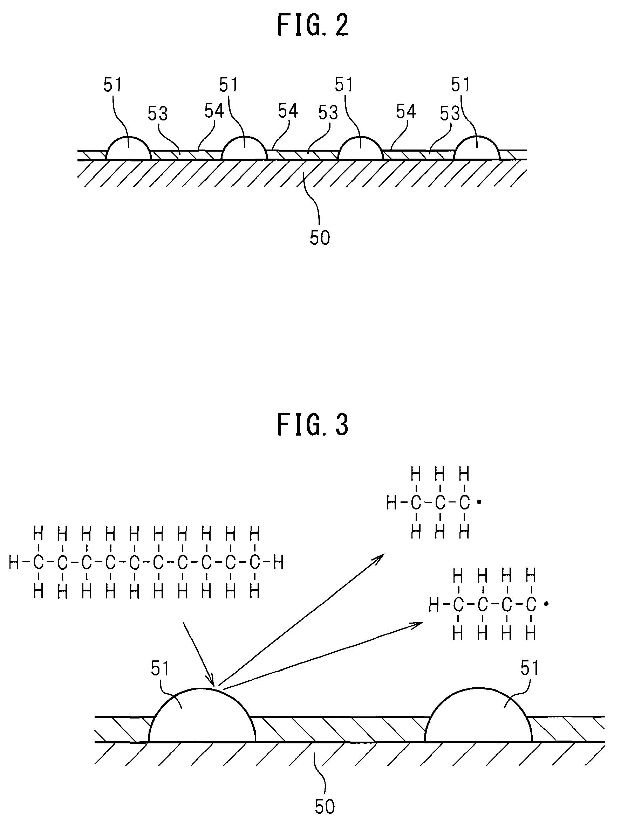

FIG. 2 schematically shows a surface part of a catalyst carrier which is carried on a substrate of the exhaust purification catalyst 13 shown in FIG. 1. At this exhaust purification catalyst 13, as shown in FIG. 2, for example, there is provided a catalyst carrier 50 made of alumina on which precious metal catalysts 51 comprised of platinum Pt are carried. Furthermore, on this catalyst carrier 50, a basic layer 53 is formed which includes at least one element selected from potassium K, sodium Na, cesium Cs, or another such alkali metal, barium Ba, calcium Ca, or another such alkali earth metal, a lanthanide or another such rare earth and silver Ag, copper Cu, iron Fe, iridium Ir, or another metal able to donate electrons to NO_{X}. In this case, on the catalyst carrier 50 of the exhaust purification catalyst 13, in addition to platinum Pt, rhodium Rh or palladium Pd may be further carried. Note that the exhaust gas flows along the top of the catalyst carrier 50, so the precious metal catalysts 51 can be said to be carried on the exhaust gas flow surfaces of the exhaust purification catalyst 13. Further, the surface of the basic layer 53 exhibits basicity, so the surface of the basic layer 53 is called the "basic exhaust gas flow surface parts 54".

If hydrocarbons are injected from the hydrocarbon feed valve 15 into the exhaust gas, the hydrocarbons are reformed by the exhaust purification catalyst 13. In the present invention, at this time, the reformed hydrocarbons are used to remove the NOx at the exhaust purification catalyst 13. FIG. 3 schematically shows the reformation action performed at the exhaust purification catalyst 13 at this time. As shown in FIG. 3, the hydrocarbons HC which are injected from the hydrocarbon feed valve 15 become radical hydrocarbons HC with a small carbon number due to the precious metal catalyst 51.

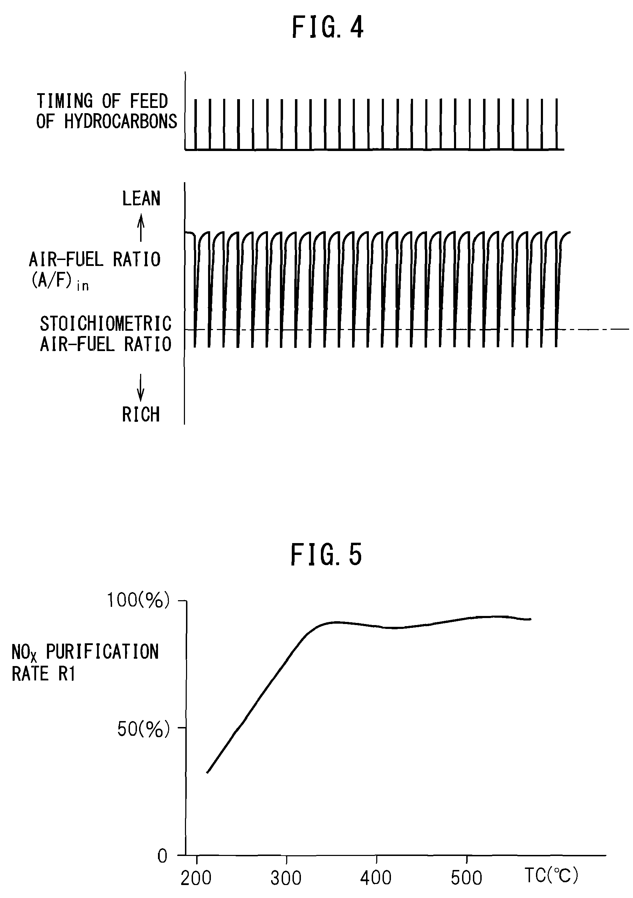

FIG. 4 shows the feed timing of hydrocarbons from the hydrocarbon feed valve 15 and the change in the air-fuel ratio (A/F)in of the exhaust gas which flows into the exhaust purification catalyst 13. Note that, the change in the air-fuel ratio (A/F)in depends on the change in concentration of the hydrocarbons in the exhaust gas which flows into the exhaust purification catalyst 13, so it can be said that the change in the air-fuel ratio (A/F)in shown in FIG. 4 expresses the change in concentration of the hydrocarbons. However, if the hydrocarbon concentration becomes higher, the air-fuel ratio (A/F)in becomes smaller, so, in FIG. 4, the more to the rich side the air-fuel ratio (A/F)in becomes, the higher the hydrocarbon concentration.

FIG. 5 shows the NOx purification rate R1 by the exhaust purification catalyst 13 with respect to the catalyst temperatures TC of the exhaust purification catalyst 13 when periodically making the concentration of hydrocarbons which flow into the exhaust purification catalyst 13 change so as to, as shown in FIG. 4, periodically make the air-fuel ratio (A/F)in of the exhaust gas flowing to the exhaust purification catalyst 13 rich. In this regard, as a result of a research relating to NO_{X} purification for a long time, it is learned that if making the concentration of hydrocarbons which flow into the exhaust purification catalyst 13 vibrate by within a predetermined range of amplitude and within a predetermined range of period, as shown in FIG. 5, an extremely high NOx purification rate R1 is obtained even in a 350°C or higher high temperature region.

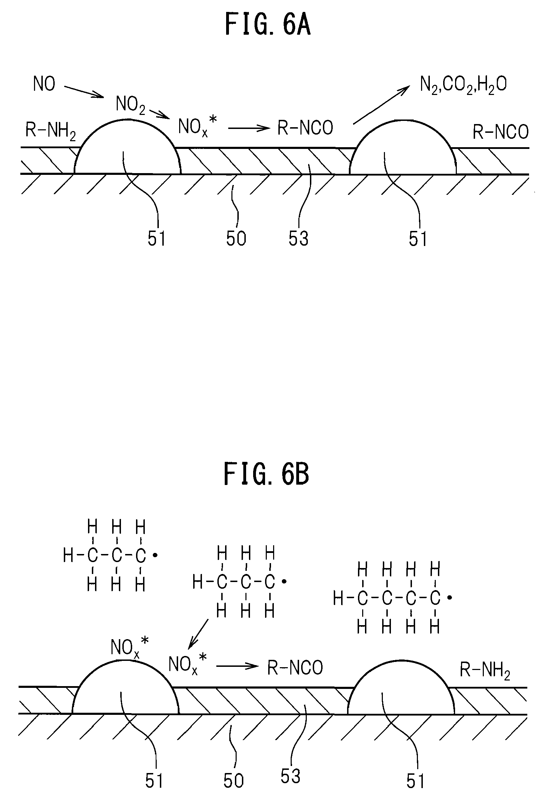

Furthermore, it is learned that at this time, a large amount of reducing intermediates which contain nitrogen and hydrocarbons continues to be held or adsorbed on the surface of the basic layer 53, that is, on the basic exhaust gas flow surface parts 54 of the exhaust purification catalyst 13, and the reducing intermediates play a central role in obtaining a high NOx purification rate R1. Next, this will be explained with reference to FIGS. 6A and 6B. Note that, these FIGS. 6A and 6B schematically show the surface part of the catalyst carrier 50 of the exhaust purification catalyst 13. These FIGS. 6A and 6B show the reaction which is presumed to occur when the concentration of hydrocarbons which flow into the exhaust purification catalyst 13 is made to vibrate by within a predetermined range of amplitude and within a predetermined range of period.

FIG. 6A shows when the concentration of hydrocarbons which flow into the exhaust purification catalyst 13 is low, while FIG. 6B shows when hydrocarbons are fed from the hydrocarbon feed valve 15 and the air-fuel ratio (A/F)in of the exhaust gas flowing to the exhaust purification catalyst 13 is made rich, that is, the concentration of hydrocarbons which flow into the exhaust purification catalyst 13 becomes higher.

Now, as will be understood from FIG. 4, the air-fuel ratio of the exhaust gas which flows into the exhaust purification catalyst 13 is maintained lean except for an instant, so the exhaust gas which flows into the exhaust purification catalyst 13 normally becomes a state of oxygen excess. At this time, part of the NO which is contained in the exhaust gas deposits on the exhaust purification catalyst 13, while part of the NO which is contained in the exhaust gas, as shown in FIG. 6A, is oxidized on the platinum 51 and becomes NO₂. Next, this NO₂ is further oxidized and becomes NO₃. Further, part of the NO₂ becomes NO₂⁻. Therefore, on the platinum Pt 51, NO₂⁻ and NO₃ are produced. The NO which is deposited on the exhaust purification catalyst 13 and the NO₂⁻ and NO₃ which are formed on the platinum Pt 51 are strong in activity. Therefore, below, these NO, NO₂⁻, and NO₃ will be referred to as the "active NO_{X}*".

On the other hand, if hydrocarbons are fed from the hydrocarbon feed valve 15 and the air-fuel ratio (A/F)in of the exhaust gas flowing to the exhaust purification catalyst 13 is made rich, the hydrocarbons successively deposit over the entire exhaust purification catalyst 13. The majority of the deposited hydrocarbons successively react with oxygen and are burned. Part of the deposited hydrocarbons are successively reformed and become radicalized inside of the exhaust purification catalyst 13 as shown in FIG. 3. Therefore, as shown in FIG. 6B, the hydrogen concentration around the active NO_{X}* becomes higher. In this regard, if, after the active NO_{X}* is produced, the state of a high oxygen concentration around the active NO_{X}* continues for a constant time or more, the active NO_{X}* is oxidized and is absorbed in the form of nitrate ions NO₃⁻ inside the basic layer 53. However, if, before this constant time elapses, the hydrocarbon concentration around the active NO_{X}* becomes higher, as shown in FIG. 6B, the active NO_{X}* reacts on the platinum 51 with the radical hydrocarbons HC to thereby form the reducing intermediates. The reducing intermediates are adhered or adsorbed on the surface of the basic layer 53.

Note that, at this time, the first produced reducing intermediate is considered to be a nitro compound R-NO₂. If this nitro compound R-NO₂ is produced, the result becomes a nitrile compound R-CN, but this nitrile compound R-CN can only survive for an instant in this state, so immediately becomes an isocyanate compound R-NCO. This isocyanate compound R-NCO becomes an amine compound R-NH₂ if hydrolyzed. However, in this case, what is hydrolyzed is considered to be part of the isocyanate compound R-NCO. Therefore, as shown in FIG. 6B, the majority of the reducing intermediates which are held or adsorbed on the surface of the basic layer 53 is believed to be the isocyanate compound R-NCO and amine compound R-NH₂.

On the other hand, as shown in FIG. 6B, if the produced reducing intermediates are surrounded by the hydrocarbons HC, the reducing intermediates are blocked by the hydrocarbons HC and the reaction will not proceed any further. In this case, if the concentration of hydrocarbons which flow into the exhaust purification catalyst 13 is lowered and then the hydrocarbons which are deposited around the reducing intermediates will be oxidized and consumed, and thereby the concentration of oxygen around the reducing intermediates becomes higher, the reducing intermediates react with the NOx in the exhaust gas, react with the active NO_{X}*, react with the surrounding oxygen, or break down on their own. Due to this, the reducing intermediates R-NCO and R-NH₂ are converted to N₂, CO₂, and H₂O as shown in FIG. 6A, therefore the NO_{X} is removed.

In this way, in the exhaust purification catalyst 13, when the concentration of hydrocarbons which flow into the exhaust purification catalyst 13 is made higher, reducing intermediates are produced, and after the concentration of hydrocarbons which flow into the exhaust purification catalyst 13 is lowered, when the oxygen concentration is raised, the reducing intermediates react with the NO_{X} in the exhaust gas or the active NO_{X}* or oxygen or break down on their own whereby the NO_{X} is removed. That is, in order for the exhaust purification catalyst 13 to remove the NOx, the concentration of hydrocarbons which flow into the exhaust purification catalyst 13 has to be periodically changed.

Of course, in this case, it is necessary to raise the hydrocarbon concentration to a concentration sufficiently high for producing the reducing intermediates and it is necessary to lower the hydrocarbon concentration to a concentration sufficiently low for making the produced reducing intermediates react with the NOx in the exhaust gas or the active NO_{X}* or oxygen or break down on their own. That is, it is necessary to make the concentration of hydrocarbons which flow into the exhaust purification catalyst 13 vibrate by within a predetermined range of amplitude. Note that, in this case, it is necessary to hold these reducing intermediates on the basic layer 53, that is, the basic exhaust gas flow surface parts 54, until the produced reducing intermediates R-NCO and R-NH₂ react with the NOx in the exhaust gas or the active NO_{X}* or oxygen or break down themselves. For this reason, the basic exhaust gas flow surface parts 54 are provided.

On the other hand, if lengthening the feed period of the hydrocarbons, the time until the oxygen concentration becomes higher becomes longer in the period after the hydrocarbons are fed until the hydrocarbons are next fed. Therefore, the active NO_{X}* is absorbed in the basic layer 53 in the form of nitrates without producing reducing intermediates. To avoid this, it is necessary to make the concentration of hydrocarbons which flow into the exhaust purification catalyst 13 vibrate by within a predetermined range of period.

Therefore, in the embodiment according to the present invention, to react the NOx contained in the exhaust gas and the reformed hydrocarbons and produce the reducing intermediates R-NCO and R-NH₂ containing nitrogen and hydrocarbons, the precious metal catalysts 51 are carried on the exhaust gas flow surfaces of the exhaust purification catalyst 13. To hold the produced reducing intermediates R-NCO and R-NH₂ inside the exhaust purification catalyst 13, the basic layers 53 are formed around the precious metal catalysts 51. The reducing intermediates R-NCO and R-NH₂ which are held on the basic layer 53 are converted to N₂, CO₂, and H₂O. The vibration period of the hydrocarbon concentration is made the vibration period required for continuation of the production of the reducing intermediates R-NCO and R-NH₂. Incidentally, in the example shown in FIG. 4, the injection interval is made 3 seconds.

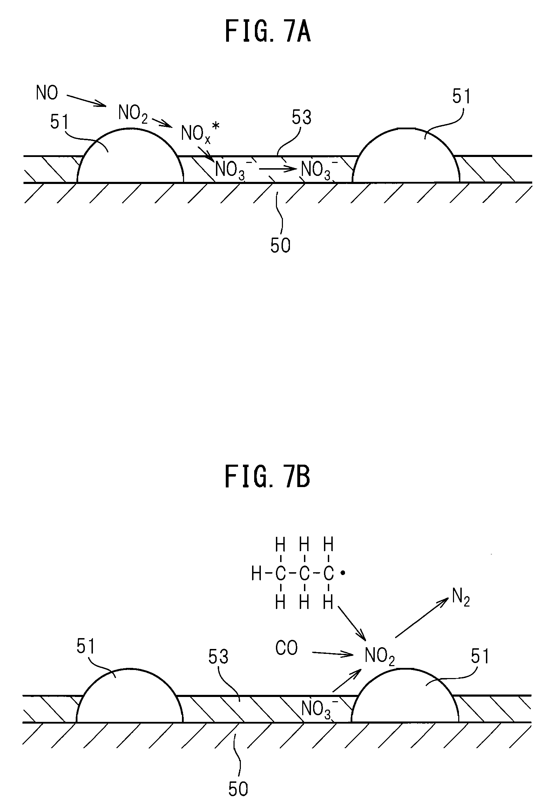

If the vibration period of the hydrocarbon concentration, that is, the injection period of hydrocarbons from the hydrocarbon feed valve 15, is made longer than the above predetermined range of period, the reducing intermediates R-NCO and R-NH₂ disappear from the surface of the basic layer 53. At this time, the active NO_{X}* which is produced on the platinum Pt 53, as shown in FIG. 7A, diffuses in the basic layer 53 in the form of nitrate ions NO₃⁻ and becomes nitrates. That is, at this time, the NOx in the exhaust gas is absorbed in the form of nitrates inside of the basic layer 53.

On the other hand, FIG. 7B shows the case where the air-fuel ratio of the exhaust gas which flows into the exhaust purification catalyst 13 is made rich when the NO_{X} is absorbed in the form of nitrates inside of the basic layer 53. In this case, the oxygen concentration in the exhaust gas falls, so the reaction proceeds in the opposite direction (NO₃⁻→NO₂), and consequently the nitrates absorbed in the basic layer 53 successively become nitrate ions NO₃⁻ and, as shown in FIG. 7B, are released from the basic layer 53 in the form of NO₂. Next, the released NO₂ is reduced by the hydrocarbons HC and CO contained in the exhaust gas.

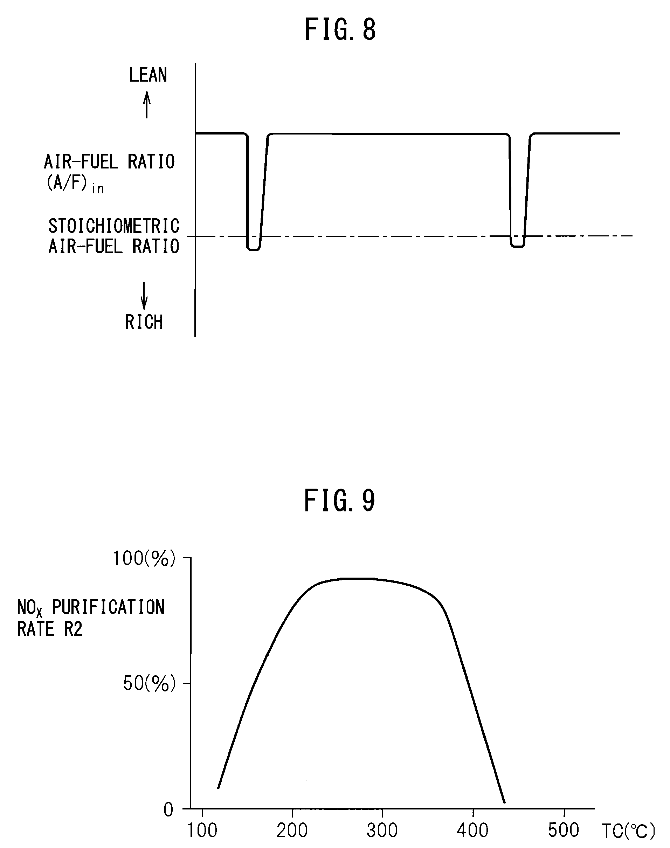

FIG. 8 shows the case of making the air-fuel ratio (A/F)in of the exhaust gas which flows into the exhaust purification catalyst 13 temporarily rich slightly before the NOx absorption ability of the basic layer 53 becomes saturated. Note that, in the example shown in FIG. 8, the time interval of this rich control is 1 minute or more. In this case, the NO_{X} which was absorbed in the basic layer 53 when the air-fuel ratio (A/F)in of the exhaust gas was lean is released all at once from the basic layer 53 and reduced when the air-fuel ratio (A/F)in of the exhaust gas is made temporarily rich. Therefore, in this case, the basic layer 53 plays the role of an absorbent for temporarily absorbing NOx.

Note that, at this time, sometimes the basic layer 53 temporarily adsorbs the NO_{X}. Therefore, if using term of "storage" as a term including both "absorption" and "adsorption", at this time, the basic layer 53 performs the role of an NOx storage agent for temporarily storing the NO_{X}. That is, in this case, if the ratio of the air and fuel (hydrocarbons) which are supplied into the engine intake passage, combustion chambers 2, and upstream of the exhaust purification catalyst 13 in the exhaust passage is referred to as "the air-fuel ratio of the exhaust gas", the exhaust purification catalyst 13 functions as an NO_{X} storage catalyst which stores the NOx when the air-fuel ratio of the exhaust gas is lean and releases the stored NOx when the oxygen concentration in the exhaust gas falls.

The solid line of FIG. 9 shows the NO_{X} purification rate R2 when making the exhaust purification catalyst 13 function as an NOx storage catalyst in this way. Note that, the abscissa of the FIG. 9 shows the catalyst temperature TC of the exhaust purification catalyst 13. When making the exhaust purification catalyst 13 function as an NOx storage catalyst, as shown in FIG. 9, when the catalyst temperature TC is 250°C to 300°C, an extremely high NOx purification rate is obtained, but when the catalyst temperature TC becomes a 350°C or higher high temperature, the NOx purification rate R2 falls.

In this way, when the catalyst temperature TC becomes 350°C or more, the NOx purification rate R2 falls because if the catalyst temperature TC becomes 350°C or more, NOx is less easily stored and the nitrates break down by heat and are released in the form of NO₂ from the exhaust purification catalyst 13. That is, so long as storing NOx in the form of nitrates, when the catalyst temperature TC is high, it is difficult to obtain a high NOx purification rate R2. However, in the new NOx purification method shown from FIG. 4 to FIGS. 6A and 6B, the amount of NO_{X} stored in the form of nitrates is small, and consequently, as shown in FIG. 5, even when the catalyst temperature TC is high, a high NO_{X} purification rate R1 is obtained.

In the embodiment according to the present invention, to be able to purify NOx by using this new NOx purification method, a hydrocarbon feed valve 15 for feeding hydrocarbons is arranged in the engine exhaust passage, an exhaust purification catalyst 13 is arranged in the engine exhaust passage downstream of the hydrocarbon feed valve 15, precious metal catalysts 51 are carried on the exhaust gas flow surfaces of the exhaust purification catalyst 13, the basic layers 53 are formed around the precious metal catalysts 51, the exhaust purification catalyst 13 has the property of reducing the NOx contained in exhaust gas by the reducing intermediates which are held on the basic layers 53 if hydrocarbons are injected from the hydrocarbon feed valve 15 within a predetermined range of period and has the property of being increased in storage amount of NO_{X} contained in exhaust gas if making the injection period of the hydrocarbon from the hydrocarbon feed valve 15 longer than this predetermined range, and, at the time of engine operation, the hydrocarbons are injected from the hydrocarbon feed valve 15 within the predetermined range of period to thereby reduce the NOx which is contained in the exhaust gas in the exhaust purification catalyst 13.

That is, the NOx purification method which is shown from FIG. 4 to FIGS. 6A and 6B can be said to be a new NOx purification method designed to remove NOx without forming so much nitrates in the case of using an exhaust purification catalyst which carries precious metal catalysts and forms a basic layer which can absorb NOx. In actuality, when using this new NOx purification method, the nitrates which are detected from the basic layer 53 are smaller in amount compared with the case where making the exhaust purification catalyst 13 function as an NO_{X} storage catalyst. Note that, this new NOx purification method will be referred to below as the "first NO_{X} removal method".

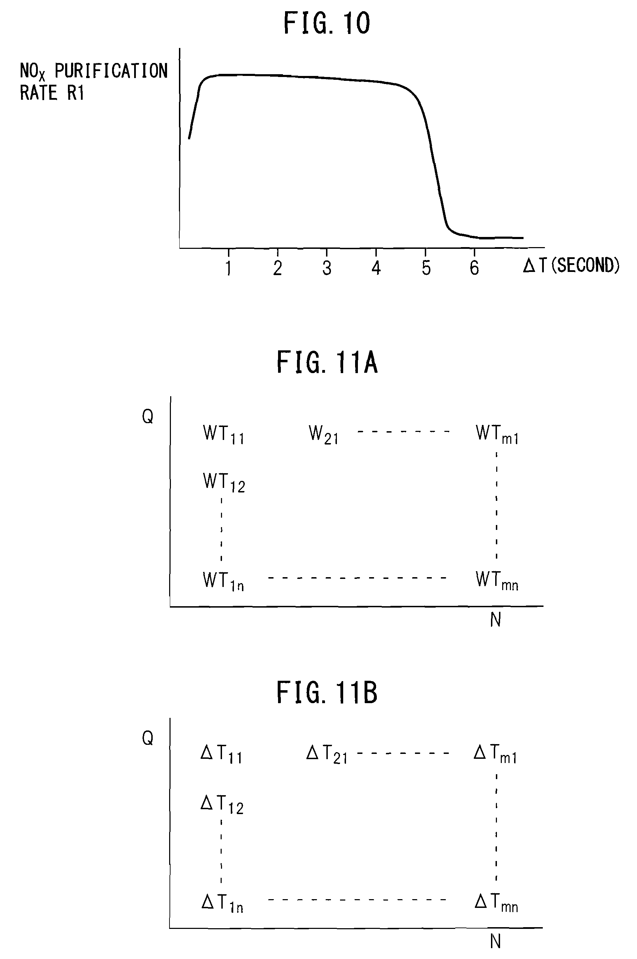

Now, as mentioned before, if the injection period ΔT of the hydrocarbons from the hydrocarbon feed valve 15 becomes longer, the time period in which the oxygen concentration around the active NO_{X}* becomes higher becomes longer in the time period after the hydrocarbons are injected to when the hydrocarbons are next injected. In this case, in the embodiment shown in FIG. 1, if the injection period ΔT of the hydrocarbons becomes longer than about 5 seconds, the active NO_{X}* starts to be absorbed in the form of nitrates inside the basic layer 53. Therefore, as shown in FIG. 10, if the vibration period ΔT of the hydrocarbon concentration becomes longer than about 5 seconds, the NOx purification rate R1 falls. Therefore, the injection period ΔT of the hydrocarbons has to be made 5 seconds or less.

On the other hand, in the embodiment of the present invention, if the injection period ΔT of the hydrocarbons becomes about 0.3 second or less, the injected hydrocarbons start to build up on the exhaust gas flow surfaces of the exhaust purification catalyst 13, therefore, as shown in FIG. 10, if the injection period ΔT of the hydrocarbons becomes about 0.3 second or less, the NO_{X} purification rate R1 falls. Therefore, in the embodiment according to the present invention, the injection period of the hydrocarbons is made from 0.3 second to 5 seconds.

Now, in the embodiment according to the present invention, when the NO_{X} purification action by the first NOx removal method is performed, by controlling the injection amount and injection timing of hydrocarbons from the hydrocarbon feed valve 15, the air-fuel ratio (A/F)in of the exhaust gas flowing into the exhaust purification catalyst 13 and the injection period ΔT of the hydrocarbons are controlled so as to become the optimal values for the engine operating state. In this case, in the embodiment according to the present invention, the optimum hydrocarbon injection amount WT when the NOx purification action by the first NOx removal method is performed is stored as a function of the injection amount Q from fuel injectors 3 and the engine speed N in the form of a map such as shown in FIG. 11A in advance in the ROM 32. Further, the optimum injection period ΔT of the hydrocarbons at this time is also stored as a function of the injection amount Q from the fuel injectors 3 and the engine speed N in the form of a map such as shown in FIG. 11B in advance in the ROM 32.

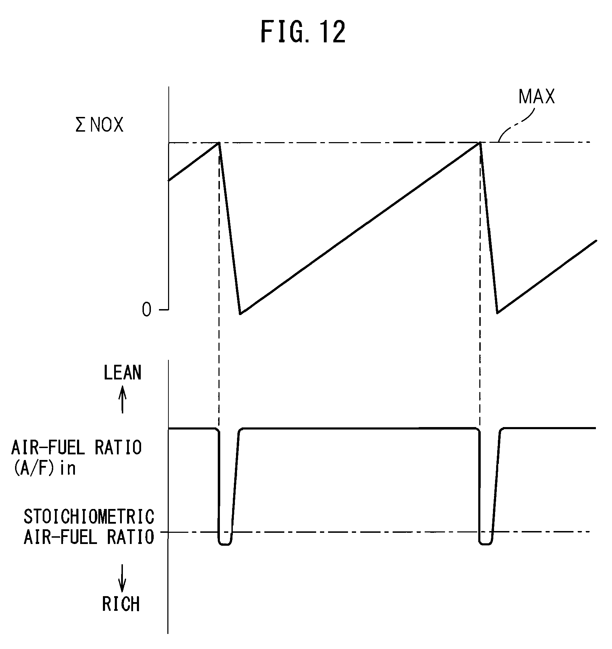

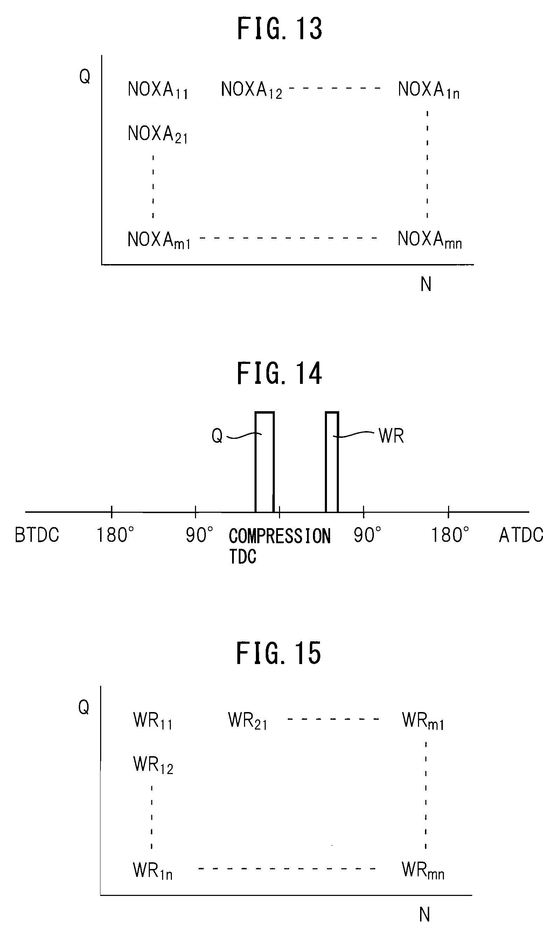

Next, referring to FIG. 12 and FIG. 13, an NOx purification method when making the exhaust purification catalyst 13 function as an NOx storage catalyst will be explained specifically. The NOx purification method in the case of making the exhaust purification catalyst 13 function as an NOx storage catalyst in this way will be referred to below as the "second NO_{X} removal method".

In this second NO_{X} removal method, as shown in FIG. 12, when the stored NO_{X} amount ∑NO_{X} of NO_{X} which is stored in the basic layer 53 exceeds a predetermined allowable amount MAX, the air-fuel ratio (A/F)in of the exhaust gas flowing into the exhaust purification catalyst 13 is temporarily made rich. If the air-fuel ratio (A/F)in of the exhaust gas is made rich, the NOx which was stored in the basic layer 53 when the air-fuel ratio (A/F)in of the exhaust gas was lean is released from the basic layer 53 all at once and reduced. Due to this, the NO_{X} is removed.

The stored NOx amount ∑NO_{X} is, for example, calculated from the amount of NO_{X} which is exhausted from the engine. In this embodiment according to the present invention, the exhausted NO_{X} amount NOXA of NO_{X} which is exhausted from the engine per unit time is stored as a function of the injection amount Q and engine speed N in the form of a map such as shown in FIG. 13 in advance in the ROM 32. The stored NO_{X} amount ∑NO_{X} is calculated from this exhausted NOx amount NOXA. In this case, as explained before, the period at which the air-fuel ratio (A/F)in of the exhaust gas is made rich is usually 1 minute or more.

In this second NO_{X} removal method, as shown in FIG. 14, by injecting an additional fuel WR into each combustion chamber 2 from the fuel injector 3 in addition to the combustion-use fuel Q, the air-fuel ratio (A/F)in of the exhaust gas which flows into the exhaust purification catalyst 13 is made rich. Note that, in FIG. 14, the abscissa indicates the crank angle. This additional fuel WR is injected at a timing at which it will burn, but will not appear as engine output, that is, slightly before ATDC90° after compression top dead center. This fuel amount WR is stored as a function of the injection amount Q and engine speed N in the form of a map such as shown in FIG. 15 in advance in the ROM 32. Of course, in this case, it is also possible to make the injection amount of hydrocarbons from the hydrocarbon feed valve 15 increase so as to make the air-fuel ratio (A/F)in of the exhaust gas rich.

Note that, as will be understood from a comparison of the NO_{X} purification rate R1 by the first NO_{X} removal method which is shown in FIG. 5 and the NO_{X} purification rate R2 by the second NOx removal method which is shown in FIG. 9, when the catalyst temperature TC is relatively low, the NO_{X} purification rate R2 by the second NO_{X} removal method becomes higher. If the catalyst temperature TC becomes higher, the NO_{X} purification rate R1 by the first NO_{X} removal method becomes higher. Therefore, in an embodiment according to the present invention, generally speaking, when the catalyst temperature TC is low, the second NOx removal method is used, while when the catalyst temperature TC is high, the first NO_{X} removal method is used.

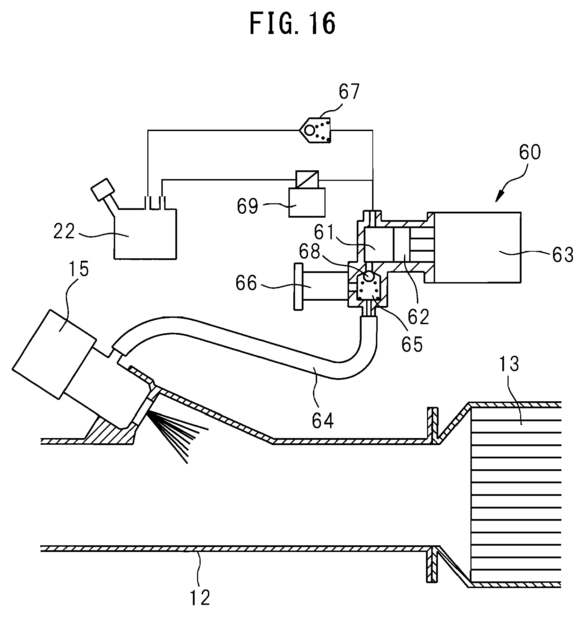

Returning again to FIG. 1, FIG. 1 shows an electric pump 60 which supplies hydrocarbons, that is, fuel, to the hydrocarbon feed valve 15, while FIG. 16 shows an enlarged view of this electric pump 60. As shown in FIG. 16, the electric pump 60 is provided with a pump chamber 61 which is filled with pressurized fuel, a pressurizing piston 62 for pressurizing fuel in the pump chamber 61, a solenoid 63 for driving the pressurizing piston 62, a pressurized fuel outflow chamber 65 which is connected through a fuel feed tube 64 to the hydrocarbon feed valve 15, and a pressure sensor 66 for detecting the fuel pressure inside of the pressurized fuel outflow chamber 65. The pump chamber 61, on the other hand, is connected to the fuel tank 22 through a check valve 67 which enables only flow from the fuel tank 22 to the pump chamber 61, while, on the other hand, is connected to the pressurized fuel outflow chamber 65 through a check valve 68 which enables only flow from the pump chamber 61 to the pressurized fuel outflow chamber 65. Furthermore, the pump chamber 61 is connected through a relief valve 69 which can control the relief pressure to the fuel tank 22. If the fuel pressure inside the pump chamber 61 exceeds the relief pressure of the relief valve 69, the fuel inside the pump chamber 61 is returned through the relief valve 69 to the inside of the fuel tank 22. Therefore, the maximum fuel pressure in the pump chamber 61 is determined by the relief pressure of the relief valve 69.

On the other hand, referring to FIG. 1, separate from the electronic control unit 30, an electric pump drive control device 70 is provided for controlling the drive operation of the electric pump 60. This electric pump drive control device 70 has an electronic control unit 71 for electric pump control use which is comprised of a computer. The output signal of the pressure sensor 66 of the electric pump 60 is, on one hand, input to the electronic control unit 30 and, on the other hand, is input to the electronic control unit 71 for electric pump control use. The pump drive signal which is output from the electronic control unit 71 for electric pump control use is sent through a drive circuit 72 to the solenoid 63 of the electric pump 60. If a pump drive signal is output from the electronic control unit 71, the solenoid 63 of the electric pump 60 is excited. On the other hand, the electronic control unit 71 for electric pump control use is supplied with a power source voltage 73 through a relay 74. This relay 74 is controlled by an output signal of the electronic control unit 30.

If the solenoid 63 of the electric pump 60 is excited, the pressurizing piston 62 is made to move to the left toward the pump chamber 61 in FIG. 16. At this time, the fuel inside the pump chamber 61 is pressurized and the pressurized fuel is sent through the check valve 68 to the pressurized fuel outflow chamber 65. Next, this fuel is supplied to the hydrocarbon feed valve 15. On the other hand, if the solenoid 63 is demagnetized, the pressurizing piston 62 is made to move to the right in FIG. 16. At this time, the fuel in the fuel tank 22 is sent through the check valve 67 to the inside of the pump chamber 61. The fuel, that is, hydrocarbons, which is supplied to the hydrocarbon feed valve 15 is injected from the nozzle opening of the hydrocarbon feed valve 15 into the exhaust gas.

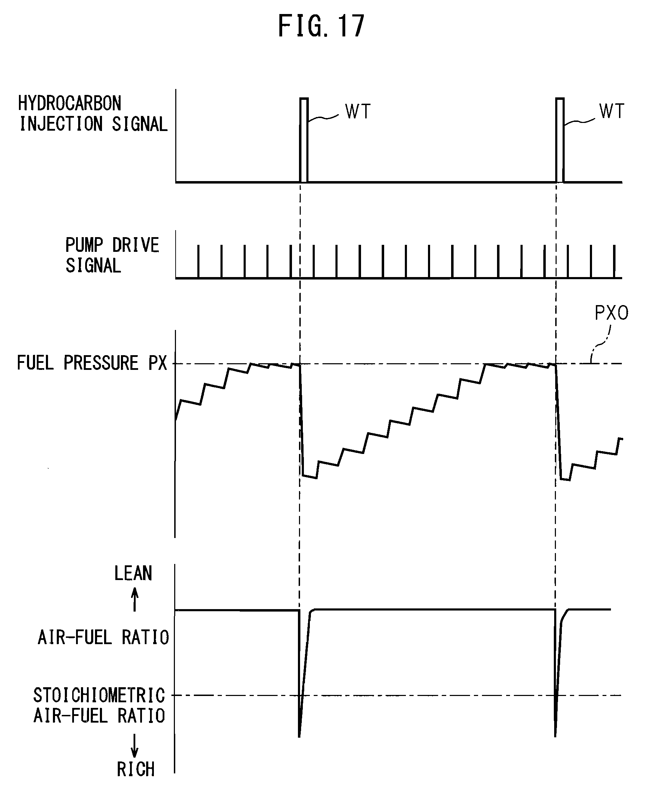

FIG. 17 shows an injection signal of hydrocarbons from the hydrocarbon feed valve 15, a pump drive signal for exciting the solenoid 63 to drive the pressurizing piston 62, the change of the fuel pressure PX of the fuel which is supplied to the hydrocarbon feed valve 15, and the change in the air-fuel ratio of the exhaust gas which flows into the exhaust purification catalyst 13 when the NOx removal action by the first NOx removal method is being performed. Note that, the fuel pressure PX of the fuel which is supplied to the hydrocarbon feed valve 15 shows the fuel pressure inside of the hydrocarbon feed valve 15, that is, the fuel pressure inside the fuel feed tube 64. As shown in FIG. 17, when the NOx removal action by the first NOx removal method is being performed, the pump drive signal is made to be continuously generated at equal intervals. If a pump drive signal is generated, the solenoid 63 is excited and fuel inside the pump chamber 61 is pressurized by the pressurizing piston 62, whereby as shown by the solid line in FIG. 17, the fuel pressure PX of the fuel which is supplied to the hydrocarbon feed valve 15 rises slightly. Next, as shown by the solid line in FIG. 17, this fuel pressure PX is made to increase a little at a time each time a pump drive signal is generated until the target fuel pressure PXO. If the fuel pressure PX reaches the target fuel pressure PXO, even if the fuel inside the pump chamber 61 is subsequently pressurized, the pressurized fuel in the pump chamber 61 is returned through the relief valve 69 to the fuel tank 22. Therefore, the fuel pressure PX is maintained at the target fuel pressure PXO which is determined from the relief pressure of the relief valve 69. Note that, in the present application, sometimes these fuel pressure PX and target fuel pressure PXO will be respectively referred to as the "injection pressure PX" and "target injection pressure PXO".

On the other hand, a hydrocarbon injection signal is output from the hydrocarbon injection control device. In an embodiment according to the present invention, the electronic control unit 30 forms this hydrocarbon injection control device. If a hydrocarbon injection signal is generated, the hydrocarbon feed valve 15 is made to open and thereby hydrocarbons are injected from the hydrocarbon feed valve 15. Note that, at this time, hydrocarbons are injected from the hydrocarbon feed valve 15 by the injection amount WT which is calculated from the map which is shown in FIG. 11A. If hydrocarbons are injected from the hydrocarbon feed valve 15, as shown by the solid line in FIG. 17, the fuel pressure PX of the fuel which is supplied to the hydrocarbon feed valve 15 rapidly falls. If the fuel pressure PX falls, the pressurizing piston 62 is made to operate each time a pump drive signal is again generated and the fuel pressure PX is made to increase a little at a time to the target fuel pressure PXO. Note that, this target fuel pressure PXO is made a relatively high fuel pressure so that when fuel, that is, hydrocarbons, is injected from the hydrocarbon feed valve 15, the air-fuel ratio of the exhaust gas which flows into the exhaust purification catalyst 13 becomes a rich air-fuel ratio.

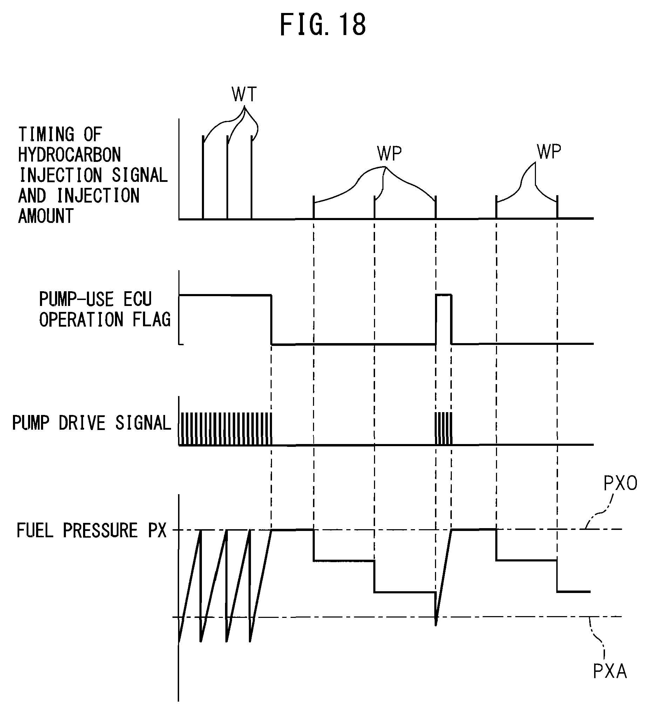

In this regard, if the hydrocarbon feed valve 15 is arranged inside the engine exhaust passage as in the present invention, when the feed of hydrocarbons from the hydrocarbon feed valve 15 is stopped during engine operation, the particulate matter etc. which is contained in the exhaust gas deposit on the nozzle opening of the hydrocarbon feed valve 15 and, as a result, the nozzle opening of the hydrocarbon feed valve 15 becomes clogged. Therefore, in the present invention, when the feed of hydrocarbons from the hydrocarbon feed valve 15 is stopped, to prevent the nozzle opening of the hydrocarbon feed valve 15 from clogging, a small amount of hydrocarbons continues to be intermittently injected from the hydrocarbon feed valve 15. However, in this case, if continuing to drive the electric pump 60 to feed a small amount of hydrocarbon, a large amount of electrical energy would be consumed for driving the electric pump 60. The electrical energy which is consumed at this time is surprisingly great. Therefore, in the present invention, when intermittently injecting a small amount of hydrocarbons from the hydrocarbon feed valve 15 to prevent the nozzle opening of the hydrocarbon feed valve 15 from clogging, the electrical energy which is consumed for driving the electric pump 60 is reduced as much as possible. Next, this will be explained with reference to FIG. 18.

Referring to FIG. 18, FIG. 18 shows a timing of a hydrocarbon injection signal and hydrocarbon injection amount from the hydrocarbon feed valve 15, a ECU operation flag for pump use which shows that the electronic control unit 71 for electric pump control use should be actuated, a pump drive signal for exciting the solenoid 63 to drive the pressurizing piston 62, and the change of the fuel pressure PX of the fuel which is supplied to the hydrocarbon feed valve 15. Note that, FIG. 18 shows the case, as a typical example, where, after NOx removal control by the first NOx removal method with a hydrocarbon injection amount shown by WT is stopped, hydrocarbons are injected to prevent clogging with a hydrocarbon injection amount shown by WP. In the example which is shown in FIG. 18, generally speaking, when NOx removal control by the first NOx removal method is performed, a ECU operation flag for pump use is set to generate a pump drive signal and the electronic control unit 71 for electric pump control use is actuated. At this time, the relay 74 is turned on.

Next, if the NOx removal control by the first NO_{X} removal method is stopped, that is, the feed of hydrocarbons from the hydrocarbon feed valve 15 is stopped, the electric pump 60 continues to be driven until the fuel pressure PX reaches the target fuel pressure PXO. If the fuel pressure PX reaches the target fuel pressure PXO, the ECU operation flag for pump use is reset. If the ECU operation flag for pump use is reset, the relay 74 is turned off. As a result, the operation of the electronic control unit 71 for electric pump control use is stopped and generation of a pump drive signal is stopped. That is, the electric pump 60 is stopped. Even if the electric pump 60 is stopped, for a while, the fuel pressure PX inside the hydrocarbon feed valve 15 is maintained at the fuel pressure PX when the electric pump 60 is stopped, that is, at the target fuel pressure PXO.

Next, a little while after the electric pump 60 is stopped, injection of hydrocarbons to prevent clogging with a hydrocarbon injection amount indicated by WP is started. This injection of hydrocarbons to prevent clogging is aimed at blowing away the particulate matter etc. which are deposited at the nozzle opening of the hydrocarbon feed valve 15, and it is sufficient to inject a small amount of hydrocarbons to blow away the particulate matter etc. Accordingly, as will be understood from FIG. 18, the amount WP of injection of hydrocarbons for preventing clogging is a considerably smaller amount compared with the hydrocarbon injection amount WT for removing NOx by the first NOx removal method. In this way, the amount WP of injection of hydrocarbons for preventing clogging is small, so even if injecting hydrocarbons to prevent clogging, as shown in FIG. 18, the fuel pressure PX inside the hydrocarbon feed valve 15 only falls a little. Therefore, even if injecting hydrocarbons to prevent clogging, the fuel pressure PX inside the hydrocarbon feed valve 15 continues to be maintained at a high enough fuel pressure for injecting hydrocarbons to prevent clogging. Therefore, without driving the electric pump 60, it is possible to inject hydrocarbons for clogging prevention well.

In this regard, the lowest fuel pressure at which hydrocarbons can be injected to prevent clogging well, that is, the allowable fuel pressure, is considerably lower than the target fuel pressure PXO. This allowable fuel pressure is shown by PXA in FIG. 18. This allowable fuel pressure PXA is a constant value which is found by experiments in advance. As will be understood from FIG. 18, the difference between the target fuel pressure PXO, that is, the target injection pressure, and this allowable fuel pressure PXA is more than two times the amount of drop of injection pressure per injection from the hydrocarbon feed valve 15 when the electric pump 60 is stopped. Note that, this allowable fuel pressure PXA will also be called the "allowable injection pressure PXA". Hydrocarbons are injected to prevent clogging in the state where the electric pump 60 is stopped so long as the fuel pressure PX inside the hydrocarbon feed valve 15 does not fall below the allowable fuel pressure PXA.

On the other hand, when injecting hydrocarbons to prevent clogging, if the fuel pressure PX inside the hydrocarbon feed valve 15 falls below the allowable fuel pressure PXA, as shown in FIG. 18, the ECU operation flag for pump use is temporarily set and the electronic control unit 71 for electric pump control use is actuated. Therefore, a pump drive signal is issued and the electric pump 60 is driven. In this case, if the fuel pressure PX reaches the target fuel pressure PXO, the ECU operation flag for pump use is reset and the electric pump 60 is again stopped.

The injection of hydrocarbons to prevent clogging is performed when hydrocarbons are not injected from the hydrocarbon feed valve 15 for a certain time Δt after hydrocarbons are injected from the hydrocarbon feed valve 15. This certain time Δt, giving one example, is about 10 seconds. As explained above, when the NOx removal action by the first NOx removal method is being performed, the injection period of the hydrocarbons from the hydrocarbon feed valve 15 is considerably shorter than 10 seconds. Therefore, when the NOx removal control by the first NOx removal method is being performed, the injection of hydrocarbons to prevent clogging is not performed. Therefore, in the example which is shown in FIG. 18, when a certain time Δt has elapsed from when the last injection WT of hydrocarbons by the first NOx removal method is finished, that is, when 10 seconds or so have elapsed, the first injection of hydrocarbons to prevent clogging WP is performed. Next, each time a certain time Δt elapses, the injection of hydrocarbons to prevent clogging WP is performed. Note that, this certain time Δt does not necessarily have to be the same time and can be changed in accordance with the engine operating state. For example, it is possible to shorten this certain time Δt the greater the amount of generation of soot which is exhausted from the engine.

In this regard, the amount of injection WP of hydrocarbons to prevent clogging is small, so even if injecting hydrocarbons to prevent clogging, as shown in FIG. 18, the fuel pressure PX inside the hydrocarbon feed valve 15 only falls a little. Therefore, even if injecting hydrocarbons to prevent clogging once, the fuel pressure PX inside the hydrocarbon feed valve 15 continues to be maintained at a fuel pressure sufficiently high for injecting hydrocarbons to prevent clogging. However, if injecting hydrocarbons to prevent clogging several times, the fuel pressure PX inside the hydrocarbon feed valve 15 falls considerably and it is no longer possible to next inject hydrocarbons to prevent clogging well. That is, the number of times of the injection of hydrocarbons to prevent clogging WP can be used to determine whether it is possible to next inject hydrocarbons by WP to prevent clogging well. Therefore, it is possible to next inject hydrocarbons by WP to prevent clogging in the state where the electric pump 60 is stopped in accordance with the number of times of injection WP of hydrocarbons to prevent clogging.

In this case, in one embodiment of the present invention, even when the electric pump 60 is stopped, the injection of hydrocarbons to prevent clogging WP is performed in the state where the electric pump 60 is stopped until hydrocarbons are injected two times or more from the hydrocarbon feed valve 15 after stopping the electric pump 60. If expressing this a bit more generally, in one embodiment according to the present invention, even when the electric pump 60 is stopped, the amount of reducing agent which is required for preventing clogging in the state where the electric pump 60 is stopped is intermittently injected until the reducing agent is injected two times or more from the reducing agent feed valve after stopping the electric pump 60.

In this regard, as explained above, when stopping the electric pump 60, the relay 74 is turned off and the operation of the electronic control unit 71 for electric pump control use is stopped. That is, when stopping the electric pump 60, rather than simply stopping the operation of the electric pump 60, the operation of the electronic control unit 71 for electric pump control use is stopped. Therefore, not only is it possible to save the electrical energy which is required for driving the electric pump 60, but also it is possible to save the electrical energy which is required for operating the electronic control unit 71 for electric pump control use, so it is possible to greatly reduce the amount of consumption of electrical energy.

Now then, FIG. 18 shows the change in the fuel pressure PX when the NOx removal action by the first NOx removal method is performed. Hydrocarbons are injected intermittently from the hydrocarbon feed valve 15 not only when the NOx removal action by the first NOx removal method is being performed, but also, for example, when regenerating the particulate filter 14 by raising the temperature of the particulate filter 14. At this time as well, the fuel pressure PX changes as shown in FIG. 17. In this way, in the present invention, if the amount of hydrocarbons which is required for exhaust treatment is intermittently injected from the hydrocarbon feed valve 15 and the fuel pressure PX of the hydrocarbon feed valve 15, that is, the injection pressure PX, falls due to the injection of hydrocarbons, the injection pressure PX of the hydrocarbon feed valve 15 is made to rise by the electric pump 60 to the target fuel pressure PXO which is required for injecting the amount of hydrocarbons which is required for exhaust treatment, that is, the target injection pressure PXO.

On the other hand, the electric pump 60 is stopped when there is no meaning in driving the electric pump 60. As the case where there is no meaning in driving the electric pump 60, there are various cases, but whatever the case, in the present invention, the electric pump 60 is stopped when there is a demand to stop the electric pump 60 during engine operation.

Therefore, in an embodiment according to the present invention, in an exhaust purification system of an internal combustion engine comprising a hydrocarbon feed valve 15 arranged in an engine exhaust passage, a hydrocarbon injection control device for controlling the action of injection of hydrocarbons from the hydrocarbon feed valve 15, an electric pump 60 for supplying hydrocarbons to the hydrocarbon feed valve 15, and an electric pump drive control device 70 for controlling the drive operation of the electric pump 60, an amount of hydrocarbons which is required for exhaust treatment being intermittently injected from the hydrocarbon feed valve 15, and, when the injection pressure PX of the hydrocarbon feed valve 15 falls due to an injection of the hydrocarbons, the injection pressure PX of the hydrocarbon feed valve 15 being raised by an electric pump 60 to a target injection pressure PXO which enables the amount of hydrocarbons required for exhaust treatment to be injected,
in addition to a control of injecting hydrocarbons in an amount which is required for exhaust treatment, the hydrocarbon injection control device performs a control of injection for preventing clogging which prevents clogging of a nozzle opening of the hydrocarbon feed valve 15 by intermittently injecting a smaller amount of hydrocarbons from the hydrocarbon feed valve 15 compared with the amount of hydrocarbons which is required for exhaust treatment, the electric pump drive control device 70 stops the electric pump 60 when there is a demand to stop the electric pump 60 during engine operation, and, even when the electric pump 60 is stopped, the hydrocarbon injection control device intermittently injects the amount of hydrocarbons which is required for preventing clogging in the state where the electric pump 60 is stopped until the injection pressure PX of the hydrocarbons feed valve 15 falls below a predetermined allowable injection pressure PXA which is lower compared with the target injection pressure PXO or a number of injections from the hydrocarbons feed valve 15 after the electric pump 60 stops becomes a predetermined number of injections or more.

Note that, in an internal combustion engine, to remove NOx, sometimes urea water is used as the reducing agent. In this case, urea water is intermittently injected from the urea water feed valve into the exhaust gas. In this case as well, as shown in FIG. 17, the electric pump 60 is driven by a pump drive signal and the injection pressure PX of the urea water feed valve is made to change as shown in FIG. 17. Further, in this case as well, control such as shown in FIG. 18 can be performed. In this case, the amount of urea water which is required for preventing clogging is intermittently injected from the urea water feed valve. In this way, the present invention can be applied not only to the case of using a reducing agent constituted by hydrocarbons, but also the case of using a reducing agent constituted by urea water.

Therefore, if expressing the present invention so as to include the case of using either a reducing agent constituted by hydrocarbon or urea water, in the present invention, in an exhaust purification system of an internal combustion engine comprising a reducing agent feed valve 15 arranged in an engine exhaust passage, a reducing agent injection control device for controlling the action of injection of a reducing agent from the reducing agent feed valve 15, an electric pump 60 for supplying a reducing agent to the reducing agent feed valve 15, and an electric pump drive control device 70 for controlling the drive operation of the electric pump, an amount of reducing agent which is required for exhaust treatment being intermittently injected from the reducing agent feed valve 15, and, when the injection pressure PX of the reducing agent feed valve 15 falls due to an injection of the reducing agent, the injection pressure PX of the reducing agent feed valve 15 being raised by an electric pump 60 to a target injection pressure PXO which enables the amount of reducing agent required for exhaust treatment to be injected,
in addition to a control of injecting reducing agent in an amount which is required for exhaust treatment, the reducing agent injection control device performs a control of injection for preventing clogging which prevents clogging of a nozzle opening of the reducing agent feed valve 15 by intermittently injecting a smaller amount of reducing agent from the reducing agent feed valve 15 compared with the amount of reducing agent which is required for exhaust treatment, the electric pump drive control device 70 stops the electric pump 60 when there is a demand to stop the electric pump 60 during engine operation, and, even when the electric pump 60 is stopped, the reducing agent injection control device intermittently injects the amount of reducing agent which is required for preventing clogging in the state where the electric pump 60 is stopped until the injection pressure PX of the reducing agent feed valve 15 falls below a predetermined allowable injection pressure PXA which is lower compared with the target injection pressure PXO or a number of injections from the reducing agent feed valve after the electric pump 60 stops becomes a predetermined number of injections or more.

In this case, as already explained while referring to FIG. 18, when intermittently injecting the amount of reducing agent which is required for preventing clogging in the state where the electric pump 60 is stopped, if the injection pressure PX of the reducing agent feed valve falls below the allowable injection pressure PXA or when the number of injections from the reducing agent feed valve after the electric pump 60 is stopped exceeds a predetermined number of injections, the electric pump 60 is temporarily driven until the injection pressure PX of the reducing agent feed valve 15 reaches the target injection pressure PXO. Note that, in the example which is shown in FIG. 18, when NOx removal control by the first NOx removal method is stopped, the electric pump 60 is stopped. That is, if the action of injection of the amount of reducing agent which is required for exhaust treatment is stopped, the electric pump 60 is stopped. Note that, in this case, in the example which is shown in FIG. 18, if the action of injection of the amount of reducing agent which is required for exhaust treatment is stopped, the electric pump 60 is stopped after waiting for the injection pressure PX of the reducing agent feed valve to reach the target injection pressure PXO.

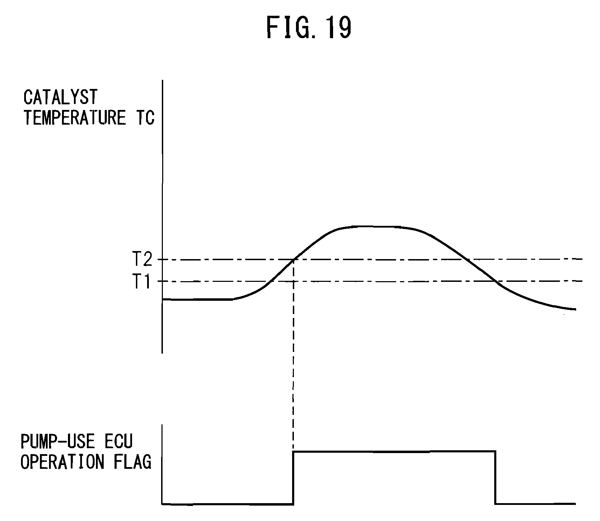

Next, referring to FIG. 19 to FIG. 23, an embodiment where when the exhaust purification catalyst 13 arranged in the engine exhaust passage is activated, the electric pump 60 starts to be driven and when the exhaust purification catalyst 13 becomes inactive in state, the electric pump 60 is stopped will be explained.

FIG. 19 shows the relationship between the catalyst temperature TC of the exhaust purification catalyst 13 and the ECU operation flag for pump use. In FIG. 19, T2 shows the catalyst temperature TC when it is judged that the exhaust purification catalyst 13 is activated, while T1 shows the catalyst temperature TC by which it is judged that the exhaust purification catalyst 13 becomes inactive in state. In the example of FIG. 19, the catalyst temperature T2 is 200°C, while the catalyst temperature T1 is 170°C.

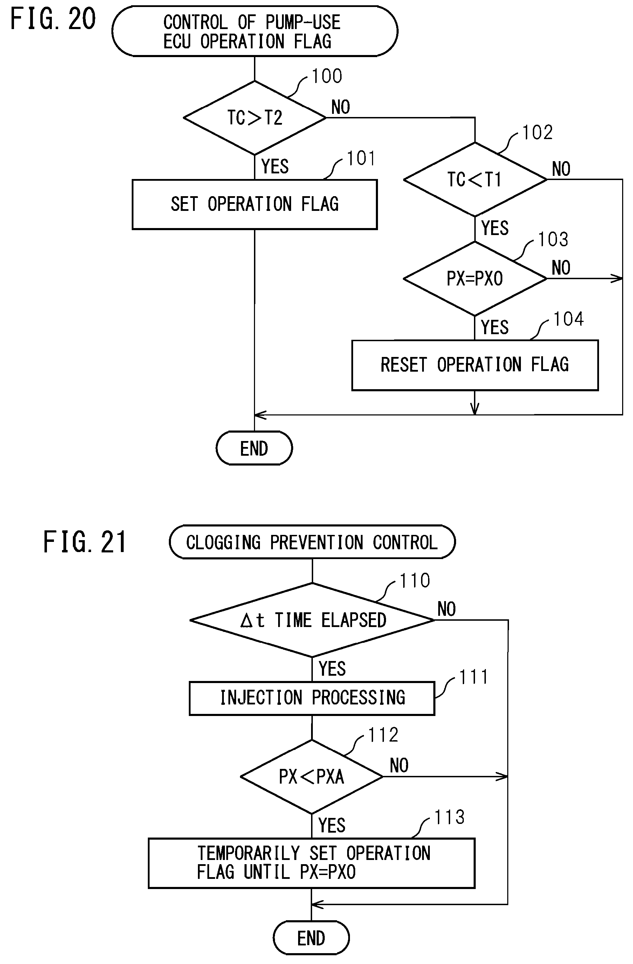

FIG. 20 shows the routine for control of the ECU operation flag for pump use. This routine is executed by interruption every a fixed time interval.

Referring to FIG. 20, first, at step 100, it is judged if the catalyst temperature TC exceeds the catalyst temperature T2. When the catalyst temperature TC exceeds the catalyst temperature T2, the routine proceeds to step 101 where the ECU operation flag for pump use is set. If the ECU operation flag for pump use is set, the electronic control unit 71 for electric pump control use is actuated and thereby the electric pump 60 is driven. On the other hand, if the catalyst temperature TC becomes lower than the catalyst temperature T2, the routine proceeds to step 102 where it is judged if the catalyst temperature TC falls below the catalyst temperature T1. When the catalyst temperature TC falls below the catalyst temperature T1, the routine proceeds to step 103 where it is judged if the injection pressure PX of the reducing agent feed valve 15 reaches the target injection pressure PXO. If the injection pressure PX of the reducing agent feed valve 15 reaches the target injection pressure PXO, the routine proceeds to step 104 where the ECU operation flag for pump use is reset. When the ECU operation flag for pump use is reset, the electronic control unit 71 for electric pump control use stops being operated and the electric pump 60 is stopped. That is, when the catalyst temperature TC falls below the catalyst temperature T1, the electric pump 60 is stopped after waiting for the injection pressure PX of the reducing agent feed valve 15 to reach the target injection pressure PXO.

FIG. 21 shows the routine for control for preventing clogging of the reducing agent feed valve 15. This routine is executed by interruption every a fixed time interval.

Referring to FIG. 21, first, at step 110, it is judged if a certain time Δt, for example, 10 seconds, has elapsed from when the reducing agent was last injected from the reducing agent feed valve 15. When it is judged that a certain time Δt has elapsed, the routine proceeds to step 111 where a small amount of reducing agent for preventing clogging is injected from the reducing agent feed valve 15. When the reducing agent for preventing clogging finishes being injected, the routine proceeds to step 112 where it is judged if the injection pressure PX of the reducing agent feed valve 15 falls below the allowable injection pressure PXA. When the injection pressure PX of the reducing agent feed valve 15 does not fall below the allowable injection pressure PXA, the processing cycle is ended. As opposed to this, when the injection pressure PX of the reducing agent feed valve 15 falls below the allowable injection pressure PXA, the routine proceeds to step 113 where the ECU operation flag for pump use is temporarily set until the injection pressure PX of the reducing agent feed valve 15 reaches the target injection pressure PXO. That is, the electric pump 60 is temporarily driven until the injection pressure PX of the reducing agent feed valve 15 reaches the target injection pressure PXO.

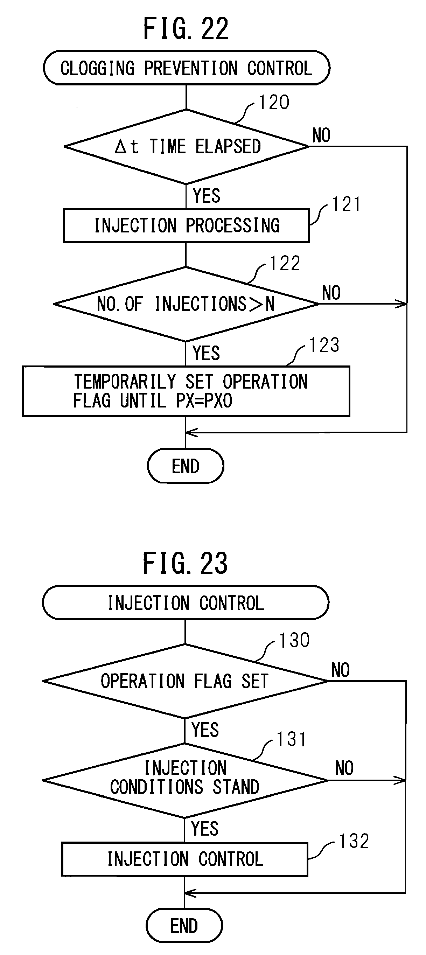

FIG. 22 shows the routine of another embodiment for control for preventing clogging of the reducing agent feed valve 15. This routine is executed also by interruption every a fixed time interval.

Referring to FIG. 22, first, at step 120, it is judged if a certain time Δt, for example, 10 seconds, has elapsed from when the reducing agent was last injected from the reducing agent feed valve 15. When it is judged that a certain time Δt has elapsed, the routine proceeds to step 121 where a small amount of reducing agent for preventing clogging is injected from the reducing agent feed valve 15. When the reducing agent for preventing clogging finishes being injected, the routine proceeds to step 122 where it is judged if the number of injections from the reducing agent feed valve 15 reaches a predetermined number of injections N or more, for example, 2 or more. When the number of injections from the reducing agent feed valve 15 does not reach the predetermined number of injections N or more, the processing cycle is ended. As opposed to this, when the number of injections from the reducing agent feed valve 15 becomes a predetermined number of injections N or more, the routine proceeds to step 123 where the ECU operation flag for pump use is temporarily set until the injection pressure PX of the reducing agent feed valve 15 reaches the target injection pressure PXO. That is, the electric pump 60 is temporarily driven until the injection pressure PX of the reducing agent feed valve 15 reaches the target injection pressure PXO.

FIG. 23 shows the routine for control of injection of the reducing agent from the reducing agent feed valve 15. This routine is executed also by interruption every a fixed time interval.

Referring to FIG. 23, first, at step 130, it is judged if the ECU operation flag for pump use is set. When the ECU operation flag for pump use is not set, that is, when the exhaust purification catalyst 13 is in the inactive state, the processing cycle is ended. As opposed to this, when the ECU operation flag for pump use is set, that is, when the exhaust purification catalyst 13 is activated, the routine proceeds to step 131 where it is judged if the conditions for injection of the reducing agent stand. For example, when in an operating state where NOx removal control by the first NOx removal method should be performed, an operating state where the particulate filter 14 should be regenerated, or an operating state where urea water should be fed, it is judged that the conditions for injection of the reducing agent stand. When it is judged that the conditions for injection of the reducing agent stand, the routine proceeds to step 132 where control for injection of the reducing agent from the reducing agent feed valve 15 is performed.

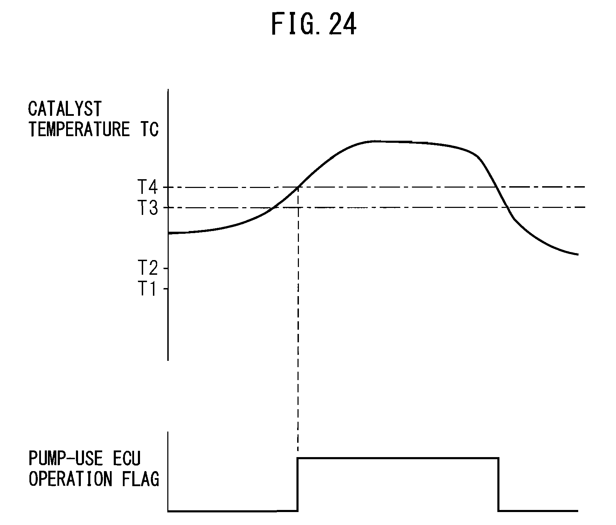

Next, referring to FIG. 24 to FIG. 27, another embodiment which uses hydrocarbons as a reducing agent and which drives the electric pump 60 when the first NOx removal method is used will be explained.

Now then, as explained above, in case where the first NO_{X} removal method and the second NO_{X} removal method are used, when the catalyst temperature TC is low, the second NOx removal method is used, while when the catalyst temperature TC is high, the first NOx removal method is used. In this case, when the first NOx removal method is used, hydrocarbons are intermittently continuously injected from the hydrocarbon feed valve 15. Therefore, when the first NO_{X} removal method is used, the electric pump 60 has to continue to be driven.

On the other hand, in an embodiment according to the present invention, when the second NOx removal method is used, usually rather than have the hydrocarbon feed valve 15 inject hydrocarbons, the fuel injector 3 is made to inject additional fuel to perform the action of release of NOx from the exhaust purification catalyst 13. Therefore, when the second NO_{X} removal method is used, it can be said to be preferable to stop the electric pump 60. Further, when the exhaust purification catalyst 13 should release NOx, even if injecting hydrocarbons from the hydrocarbon feed valve 15, the injection period of the hydrocarbons becomes considerably long. Therefore, in this case, when injecting hydrocarbons from the hydrocarbon feed valve 15, it is sufficient to drive the electric pump 60. Therefore, when using the second NO_{X} removal method, it can be said to be preferable to stop the electric pump 60 except when necessary. Therefore, in this embodiment, when the first NO_{X} removal method is used, the electric pump 60 is driven, while when the second NOx removal method is used, the electric pump 60 is stopped.

Now then, as explained above, in an embodiment according to the present invention, when the catalyst temperature TC is low, the second NOx removal method is used, while when the catalyst temperature TC is high, the first NO_{X} removal method is used. Therefore, in this embodiment, if the catalyst temperature TC becomes high, the NO_{X} removal method is switched from the second NO_{X} removal method to the first NO_{X} removal method. FIG. 24 shows the relationship between the catalyst temperature TC of the exhaust purification catalyst 13 and the ECU operation flag for pump use when the NO_{X} removal method is switched. In FIG. 24, T4 shows the catalyst temperature TC when the NO_{X} removal method is switched from the second NO_{X} removal method to the first NO_{X} removal method, while T3 shows the catalyst temperature TC when the NOx removal method is switched from the first NO_{X} removal method to the second NO_{X} removal method. Further, in FIG. 24, T2 shows the catalyst temperature TC where it is judged that the exhaust purification catalyst 13 is activated, while T1 shows the catalyst temperature TC where it is judged that the exhaust purification catalyst 13 becomes inactive in state.

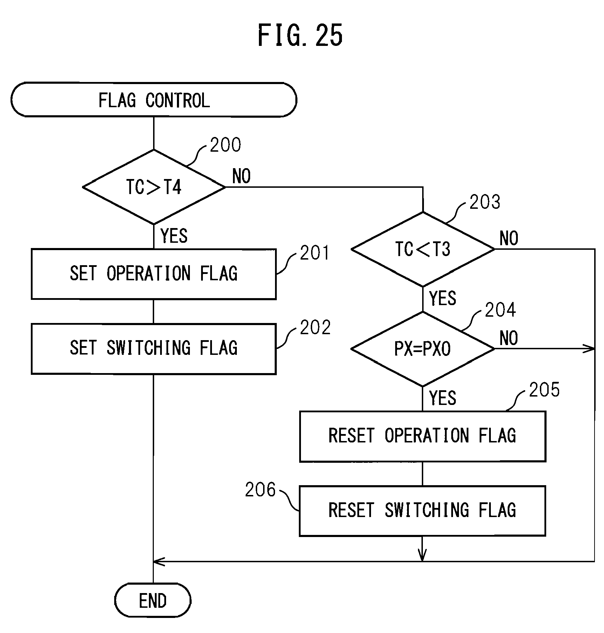

FIG. 25 shows a routine for controlling the ECU operation flag for pump use and the switching flag for the NOx removal method. This routine is executed by interruption every a fixed time interval.

Referring to FIG. 25, first, at step 200, it is judged if the catalyst temperature TC exceeds the catalyst temperature T4. When the catalyst temperature TC exceeds the catalyst temperature T4, the routine proceeds to step 201 where the ECU operation flag for pump use is set. If the ECU operation flag for pump use is set, the electronic control unit 71 for electric pump control use is operated. Due to this, the electric pump 60 is driven. Next, at step 202, the switching flag is set. If the switching flag is set, the NOx removal method is switched from the second NO_{X} removal method to the first NO_{X} removal method.

On the other hand, if the catalyst temperature TC becomes lower than the catalyst temperature T4, the routine proceeds to step 203 where it is judged if the catalyst temperature TC falls below the catalyst temperature T3. When the catalyst temperature TC falls below the catalyst temperature T3, the routine proceeds to step 204 where it is judged if the injection pressure PX of the hydrocarbon feed valve 15 reaches the target injection pressure PXO. If the injection pressure PX of the hydrocarbon feed valve 15 reaches the target injection pressure PXO, the routine proceeds to step 205 where the ECU operation flag for pump use is reset. If the ECU operation flag for pump use is reset, operation of the electronic control unit 71 for electric pump control use is stopped and the electric pump 60 is stopped. That is, in this embodiment as well, when the catalyst temperature TC falls below the catalyst temperature T3, the electric pump 60 is stopped after the injection pressure PX of the hydrocarbon feed valve 15 reaches the target injection pressure PXO. Next, at step 206, the switching flag is reset. If the switching flag is reset, the NO_{X} removal method is switched from the first NO_{X} removal method to the second NO_{X} removal method.

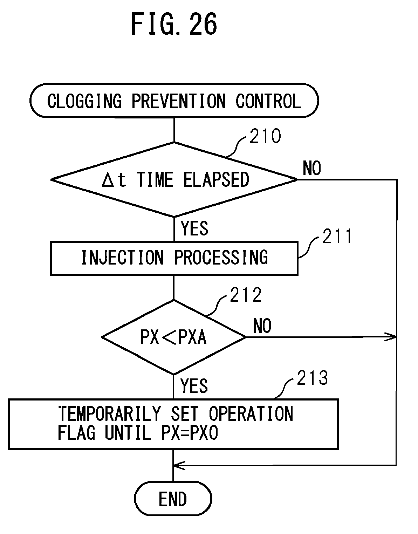

FIG. 26 shows the routine for control for preventing clogging of the hydrocarbon feed valve 15. This routine is executed by interruption every a fixed time interval. The routine which is shown in this FIG. 26 is substantially the same as the routine which is shown in FIG. 21.

That is, referring to FIG. 26, first, at step 210, it is judged if a certain time Δt has elapsed from when hydrocarbons were last injected from the hydrocarbon feed valve 15. When it is judged that a certain time Δt has elapsed, the routine proceeds to step 211 where a small amount of hydrocarbons for preventing clogging is injected from the hydrocarbon feed valve 15. If the injection of hydrocarbons for preventing clogging is finished, the routine proceeds to step 212 where it is judged if the injection pressure PX of the hydrocarbon feed valve 15 falls below the allowable injection pressure PXA. When it is judged that the injection pressure PX of the hydrocarbon feed valve 15 falls below the allowable injection pressure PXA, the routine proceeds to step 213 where the ECU operation flag for pump use is temporarily set until the injection pressure PX of the hydrocarbon feed valve 15 reaches the target injection pressure PXO. That is, the electric pump 60 is temporarily driven until the injection pressure PX of the hydrocarbon feed valve 15 reaches the target injection pressure PXO.

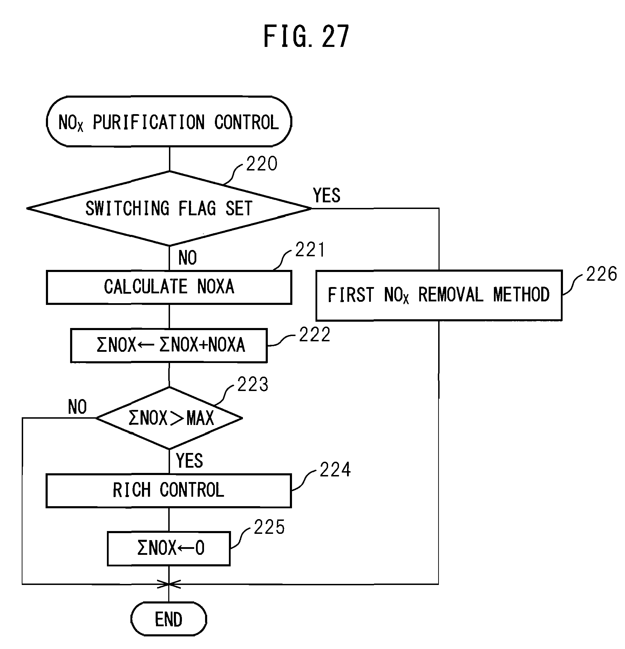

FIG. 27 shows an NO_{X} purification control routine. This routine is executed also by interruption every a fixed time interval.

Referring to FIG. 27, first, at step 220, it is judged if the switching flag is set. When the switching flag is not set, the routine proceeds to step 221 where the second NO_{X} removal method is used. That is, first, at step 221, the NOx amount NOXA which is exhausted per unit time is calculated from the map which is shown in FIG. 13. Next, at step 222, the NOx amount NOXA which is exhausted per unit time is added to ∑NOX whereby the stored NOx amount ∑NOX is calculated. Next, at step 223, it is judged if the stored NOx amount ∑NOX exceeds the allowable value MAX. If ∑NOX>MAX, the routine proceeds to step 224 where the additional fuel amount WR is calculated from the map which is shown in FIG. 15 and the action of injection of additional fuel from the fuel injector 3 is performed. At this time, the air-fuel ratio of the exhaust gas which flows into the exhaust purification catalyst 13 is temporarily made rich. Next, at step 225, ∑NOX is cleared.

Note that, at step 224, when injecting hydrocarbons from the hydrocarbon feed valve 15 to make the air-fuel ratio of the exhaust gas which flows into the exhaust purification catalyst 13 temporarily rich, the electric pump 60 is temporarily driven until the injection pressure PX of the hydrocarbon feed valve 15 reaches the target injection pressure PXO. When the injection pressure PX of the hydrocarbon feed valve 15 reaches the target injection pressure PXO, hydrocarbons are injected from the hydrocarbon feed valve 15. On the other hand, when it is judged at step 220 that the switching flag is set, the routine proceeds to step 226 where the NOx removal action by the first NOx removal method is performed. At this time, the amount WT of hydrocarbons which is calculated from the map which is shown in FIG. 11A is injected from the hydrocarbon feed valve 15 by the injection period ΔT which is calculated from the map which is shown in FIG. 11B.

That is, in this embodiment, the reducing agent is comprised of hydrocarbons, the reducing agent feed valve 15 is comprised of a hydrocarbon feed valve, an exhaust purification catalyst 13 is arranged in the engine exhaust passage downstream of the hydrocarbon feed valve 15, a precious metal catalyst 51 is carried on an exhaust gas flow surface of the exhaust purification catalyst 13, a basic layer 53 is formed around the precious metal catalyst 51, a first NO_{X} removal method which reduces NOx contained in the exhaust gas by a reducing intermediate which is held on the basic layer 53 and generated by injecting hydrocarbons from the hydrocarbon feed valve 15 within a predetermined range of period and a second NO_{X} removal method in which an air-fuel ratio of the exhaust gas flowing into the exhaust purification catalyst 13 is made rich by a period which is longer than the above-mentioned predetermined range to make the NOx which is stored in the exhaust purification catalyst 13 when the air-fuel ratio of the exhaust gas is lean be released from the exhaust purification catalyst 13 are used, the NO_{X} removal method is switched from the second NO_{X} removal method to the first NO_{X} removal method when the temperature of the exhaust purification catalyst 13 rises, the electric pump 60 starts to be driven when the NO_{X} removal method is switched from the second NOx removal method to the first NO_{X} removal method, and the electric pump 60 is stopped when the NOx removal method is switched from the first NOx removal method to the second NOx removal method.

Note that, as another embodiment, it is also possible to arrange an oxidation catalyst for reforming hydrocarbons inside the engine exhaust passage upstream of the exhaust purification catalyst 13.

### Reference Signs List

- 4: intake manifold
- 5: exhaust manifold
- 7: exhaust turbocharger
- 12: exhaust pipe
- 13: exhaust purification catalyst
- 14: particulate filter
- 15: hydrocarbon feed valve
- 60: electric pump
- 70: electric pump drive control device

## Claims

1. An exhaust purification system of internal combustion engine comprising:
a reducing agent feed valve (15) arranged in an engine exhaust passage (12),
a reducing agent injection control device (30) for controlling an action of injection of a reducing agent from the reducing agent feed valve (15),
an electric pump (60) for supplying a reducing agent to the reducing agent feed valve (15), and
an electric pump drive control device (70) for controlling a drive operation of the electric pump (60),
wherein the reducing agent injection control device (30) is designed such that an amount of reducing agent which is required for exhaust treatment is intermittently injected from the reducing agent feed valve (15), and, when an injection pressure of the reducing agent feed valve (15) falls due to an injection of the reducing agent, the injection pressure of the reducing agent feed valve (15) is raised by the electric pump (60) to a target injection pressure which enables the amount of reducing agent required for exhaust treatment to be injected,
wherein the reducing agent injection control device (30) is further designed such that said reducing agent injection control device (30) performs, in addition to a control of injecting reducing agent in an amount which is required for exhaust treatment, a control of injection for preventing clogging which prevents clogging of a nozzle opening of the reducing agent feed valve (15) by intermittently injecting a smaller amount of reducing agent from the reducing agent feed valve (15) compared with the amount of reducing agent which is required for exhaust treatment,
**characterized in that**
said electric pump drive control device (70) is designed such that it stops the electric pump (60) when there is a demand to stop the electric pump (60) during engine operation, and that
said reducing agent injection control device (30) is designed such that, when the electric pump (60) is stopped, said reducing agent injection control device (30) intermittently injects the amount of reducing agent which is required for preventing clogging in the state where the electric pump (60) is stopped until the injection pressure of the reducing agent feed valve (15) falls below a predetermined allowable injection pressure which is lower compared with said target injection pressure or a number of injections from the reducing agent feed valve (15) after the electric pump (60) stops becomes a predetermined number of injections or more.

2. The exhaust purification system of an internal combustion engine as claimed in claim 1, wherein a difference between said target injection pressure and said allowable injection pressure is more than two times an amount of drop of injection pressure per injection from the reducing agent feed valve (15) when the electric pump (60) is stopped.

3. The exhaust purification system of an internal combustion engine as claimed in claim 1, wherein said reducing agent injection control device (30) is designed such that, when the electric pump (60) is stopped, the reducing agent injection control device (30) intermittently injects the amount of reducing agent which is required for preventing clogging in the state where the electric pump (60) is stopped until two or more injections are performed from the reducing agent feed valve (15) after the electric pump (60) stops.

4. The exhaust purification system of an internal combustion engine as claimed in claim 1, wherein the electric pump drive control device (70) is designed such that, when intermittently injecting the amount of reducing agent which is required for preventing clogging in the state where the electric pump (60) is stopped, if the injection pressure of the reducing agent feed valve (15) falls below said allowable injection pressure or the number of injections from the reducing agent feed valve (15) becomes the predetermined number of injections or more, the electric pump (60) is temporarily driven until the injection pressure of the reducing agent feed valve (15) reaches said target injection pressure.

5. The exhaust purification system of an internal combustion engine as claimed in claim 1, wherein the electric pump drive control device (70) is designed such that, if the action of injection of the amount of reducing agent which is required for said exhaust treatment is stopped, the electric pump (60) is stopped.

6. The exhaust purification system of an internal combustion engine as claimed in claim 5, wherein the electric pump drive control device (70) is designed such that, if the action of injection of the amount of reducing agent which is required for exhaust treatment is stopped, the electric pump (60) is stopped after waiting for the injection pressure of the reducing agent feed valve (15) to reach the target injection pressure.

7. The exhaust purification system of an internal combustion engine as claimed in claim 1, wherein said electric pump drive control device (70) is designed such that it starts the drive of the electric pump (60) when an exhaust purification catalyst (13) arranged in the engine exhaust passage (12) is activated and stops the electric pump (60) when said exhaust purification catalyst (13) becomes the inactive state.

8. The exhaust purification system of an internal combustion engine as claimed in claim 1, wherein:
said reducing agent is comprised of hydrocarbons,
said reducing agent feed valve (15) is comprised of a hydrocarbon feed valve,
an exhaust purification catalyst (13) is arranged in the engine exhaust passage (12) downstream of said hydrocarbon feed valve,
a precious metal catalyst (51) is carried on an exhaust gas flow surface of the exhaust purification catalyst (13),
a basic layer (53) is formed around the precious metal catalyst (51),
the exhaust purification system being designed such that
a first NO_{X} removal method which reduces NO_{X} contained in the exhaust gas by a reducing intermediate which is held on the basic layer (53) and generated by injecting hydrocarbons from the hydrocarbon feed valve within a predetermined range of period and a second NOx removal method in which an air-fuel ratio of the exhaust gas flowing into the exhaust purification catalyst (13) is made rich by a period which is longer than said predetermined range to make the NOx which is stored in the exhaust purification catalyst (13) when the air-fuel ratio of the exhaust gas is lean be released from the exhaust purification catalyst (13) are used,
a NO_{X} removal method is switched from the second NO_{X} removal method to the first NO_{X} removal method when the exhaust purification catalyst (13) rises in temperature, wherein the electric pump drive control device (70) is designed to start the electric pump (60) to be driven when the NOx removal method is switched from the second NOx removal method to the first NO_{X} removal method, and to stop the electric pump (60) when the NOx removal method is switched from the first NO_{X} removal method to the second NO_{X} removal method.

## Patentansprüche

1. Abgasreinigungssystem für eine Verbrennungsmaschine, aufweisend:
ein Reduktionsmittel-Zuführventil (15), das in einer Maschinenabgasleitung (12) angeordnet ist,
eine Reduktionsmittel-Einspritzsteuervorrichtung (30) zum Steuern eines Einspritzvorgangs eines Reduktionsmittels von dem Reduktionsmittel-Zuführventil (15),
eine elektrische Pumpe (60) zum Zuführen eines Reduktionsmittels zu dem Reduktionsmittel-Zuführventil (15) und
eine Antriebssteuervorrichtung (70) für eine elektrische Pumpe zum Steuern eines Antriebsvorgangs der elektrischen Pumpe (60),
wobei die Reduktionsmittel-Einspritzsteuervorrichtung (30) so ausgeführt ist, dass eine Menge des Reduktionsmittels, die für eine Abgasbehandlung notwendig ist, von dem Reduktionsmittel-Zuführventil (15) intermittierend eingespritzt wird, und, wenn ein Einspritzdruck des Reduktionsmittel-Zuführventils (15) aufgrund einer Einspritzung des Reduktionsmittels abfällt, der Einspritzdruck des Reduktionsmittel-Zuführventils (15) durch die elektrische Pumpe (60) auf einen Soll-Einspritzdruck erhöht wird, der ermöglicht, dass die Menge des Reduktionsmittels, die für die Abgasbehandlung notwendig ist, eingespritzt werden kann,
wobei die Reduktionsmittel-Einspritzsteuervorrichtung (30) ferner so ausgeführt ist, dass die Reduktionsmittel-Einspritzsteuervorrichtung (30), neben einer Steuerung der Einspritzung des Reduktionsmittels in einer Menge, die für eine Abgasbehandlung notwendig ist, eine Steuerung der Einspritzung zum Verhindern einer Verstopfung ausführt, die ein Verstopfen einer Düsenöffnung des Reduktionsmittel-Zuführventils (15) durch intermittierendes Einspritzen einer geringeren Menge des Reduktionsmittels von dem Reduktionsmittel-Zuführventil (15) im Vergleich zu der Menge des Reduktionsmittels, die für die Abgasbehandlung notwendig ist, verhindert,
**dadurch gekennzeichnet, dass**
die Antriebssteuervorrichtung (70) der elektrischen Pumpe so ausgeführt ist, dass sie die elektrische Pumpe (60) abschaltet, wenn eine Anforderung zum Abschalten der elektrischen Pumpe (60) während eines Maschinenbetriebs vorliegt, und dadurch, dass
die Reduktionsmittel-Einspritzsteuervorrichtung (30) so ausgeführt ist, dass, wenn die elektrische Pumpe (60) abgeschaltet ist, die Reduktionsmittel-Einspritzsteuervorrichtung (30) die Menge des Reduktionsmittels, die zum Verhindern einer Verstopfung notwendig ist, in dem Zustand intermittierend einspritzt, wo die elektrische Pumpe (60) abgeschaltet ist, bis der Einspritzdruck des Reduktionsmittel-Zuführventils (15) einen vorbestimmten zulässigen Einspritzdruck unterschritten hat, der im Vergleich zu dem Soll-Einspritzdruck niedriger ist, oder bis eine Anzahl von Einspritzungen aus dem Reduktionsmittel-Zuführventil (15), nachdem die elektrische Pumpe (60) abgeschaltet worden ist, einer vorbestimmten Anzahl von Einspritzungen oder mehr entspricht.

2. Abgasreinigungssystem für eine Verbrennungsmaschine nach Anspruch 1, wobei eine Differenz zwischen dem Soll-Einspritzdruck und dem zulässigen Einspritzdruck mehr als zweimal so groß ist wie ein Betrag eines Einspritzdruckabfalls pro Einspritzung von dem Reduktionsmittel-Zuführventil (15), wenn die elektrische Pumpe (60) abgeschaltet ist.

3. Abgasreinigungssystem für eine Verbrennungsmaschine nach Anspruch 1, wobei
die Reduktionsmittel-Einspritzsteuervorrichtung (30) so ausgeführt ist, dass, wenn
die elektrische Pumpe (60) abgeschaltet ist, die Reduktionsmittel-Einspritzsteuervorrichtung (30) die Menge des Reduktionsmittels, die zum Verhindern einer Verstopfung notwendig ist, in dem Zustand intermittierend einspritzt, wo die elektrische Pumpe (60) abgeschaltet ist, bis zwei oder mehr Einspritzungen von dem Reduktionsmittel-Zuführventil (15) ausgeführt werden, nachdem die elektrische Pumpe (60) abgeschaltet worden ist.

4. Abgasreinigungssystem für eine Verbrennungsmaschine nach Anspruch 1, wobei
die Antriebssteuervorrichtung (70) der elektrischen Pumpe so ausgeführt ist, dass, beim intermittierenden Einspritzen der Menge des Reduktionsmittels, die zum Verhindern einer Verstopfung notwendig ist, in dem Zustand, wo die elektrische Pumpe (60) abgeschaltet ist, wenn der Einspritzdruck des Reduktionsmittel-Zuführventils (15) den zulässigen Einspritzdruck unterschritten hat, oder bis die Anzahl der Einspritzungen von dem Reduktionsmittel-Zuführventil (15) der vorbestimmten Anzahl von Einspritzungen oder mehr entspricht, die elektrische Pumpe (60) vorübergehend angetrieben wird, bis der Einspritzdruck des Reduktionsmittel-Zuführventils (15) den Soll-Einspritzdruck erreicht hat.

5. Abgasreinigungssystem für eine Verbrennungsmaschine nach Anspruch 1, wobei
die Antriebssteuervorrichtung (70) der elektrischen Pumpe so ausgeführt ist, dass, wenn der Vorgang der Einspritzung der Menge des Reduktionsmittels, die für die Abgasbehandlung notwendig ist, unterbrochen wird, die elektrische Pumpe (60) abgeschaltet wird.

6. Abgasreinigungssystem für eine Verbrennungsmaschine nach Anspruch 5, wobei
die Antriebssteuervorrichtung (70) für die elektrische Pumpe so ausgeführt ist, dass, wenn der Vorgang der Einspritzung der Menge des Reduktionsmittels, die für die Abgasbehandlung notwendig ist, unterbrochen wird, die elektrische Pumpe (60) abgeschaltet wird, nachdem abgewartet worden ist, bis der Einspritzdruck des Reduktionsmittel-Zuführventils (15) den Soll-Einspritzdruck erreicht hat.

7. Abgasreinigungssystem für eine Verbrennungsmaschine nach Anspruch 1, wobei
die Antriebssteuervorrichtung (70) für die elektrische Pumpe so ausgeführt ist, dass sie den Antrieb der elektrischen Pumpe (60) startet, wenn ein Abgasreinigungskatalysator (13), der in der Maschinenabgasleitung (12) angeordnet ist, aktiviert wird, und die elektrische Pumpe (60) abschaltet, wenn der Abgasreinigungskatalysator (13) den inaktiven Zustand erreicht.

8. Abgasreinigungssystem für eine Verbrennungsmaschine nach Anspruch 1, wobei:
das Reduktionsmittel aus Kohlenwasserstoffen besteht,
das Reduktionsmittel-Zuführventil (15) aus einem Kohlenwasserstoff-Zuführventil besteht,
ein Abgasreinigungskatalysator (13) in der Maschinenabgasleitung (12) stromabwärts von dem Kohlenwasserstoff-Zuführventil angeordnet ist,
ein Edelmetallkatalysator (51) auf einer Abgas-Strömungsoberfläche des Abgasreinigungskatalysators (13) getragen wird,
eine Basisschicht (53) um den Edelmetallkatalysator herum ausgebildet ist,
das Abgasreinigungssystem so ausgeführt ist, dass
ein erstes NOx-Beseitigungsverfahren, das NOx, das in dem Abgas enthalten ist, durch ein Reduktionszwischenprodukt reduziert, das auf der Basisschicht (53) gehalten wird und durch Einspritzen von Kohlenwasserstoffen aus dem Kohlenwasserstoff-Zuführventil innerhalb eines vorbestimmten Bereiches einer Zeitspanne erzeugt wird, und ein zweites NOx-Beseitigungsverfahren verwendet werden, in dem ein Kraftstoff-Luftverhältnis des Abgases, das in den Abgasreinigungskatalysator (13) strömt, dadurch angereichert wird, dass eine Zeitspanne länger ist als der vorbestimmte Bereich, so dass bewirkt wird, dass das NOx, das in dem Abgasreinigungskatalysator (13) gespeichert ist, wenn das Kraftstoff-Luftverhältnis des Abgases mager ist, aus dem Abgasreinigungskatalysator (13) freigesetzt wird,
ein NOx-Beseitigungsverfahren von dem zweiten NOx-Beseitigungsverfahren auf das erste NOx-Beseitigungsverfahren umgeschaltet wird, wenn die Temperatur des Abgasreinigungskatalysators (13) ansteigt, wobei die Antriebssteuervorrichtung (70) der elektrischen Pumpe so ausgeführt ist, dass die elektrische Pumpe (60) gestartet wird, so dass sie angetrieben wird, wenn das NOx-Beseitigungsverfahren von dem zweiten NOx-Beseitigungsverfahren auf das erste NOx-Beseitigungsverfahren umgeschaltet wird, und die elektrische Pumpe (60) abgeschaltet wird, wenn das NOx-Beseitigungsverfahren von dem ersten NOx-Beseitigungsverfahren auf das zweite NOx-Beseitigungsverfahren umgeschaltet wird.

## Revendications

1. Système de purification d'échappement de moteur à combustion interne comprenant :
une vanne d'alimentation en agent réducteur (15) disposée dans un passage d'échappement de moteur (12),
un dispositif de contrôle d'injection d'agent réducteur (30) pour contrôler une action d'injection d'un agent réducteur à partir de la vanne d'alimentation en agent réducteur (15),
une pompe électrique (60) pour introduire un agent réducteur dans la vanne d'alimentation en agent réducteur (15), et
un dispositif de contrôle de commande de pompe électrique (70) pour contrôler une opération de commande de la pompe électrique (60),
dans lequel le dispositif de contrôle d'injection d'agent réducteur (30) est mis au point de sorte qu'une quantité d'agent réducteur qui est nécessaire pour un traitement d'échappement est injectée de manière intermittente à partir de la vanne d'alimentation en agent réducteur (15), et, lorsqu'une pression d'injection de la vanne d'alimentation en agent réducteur (15) chute en raison d'une injection de l'agent réducteur, la pression d'injection de la vanne d'alimentation en agent réducteur (15) est augmentée par la pompe électrique (60) jusqu'à une pression d'injection ciblée qui permet que la quantité d'agent réducteur nécessaire pour le traitement d'échappement soit injectée,
dans lequel le dispositif de contrôle d'injection d'agent réducteur (30) est de plus mis au point de sorte que ledit dispositif de contrôle d'injection d'agent réducteur (30) réalise, en plus d'un contrôle d'injection d'agent réducteur dans une quantité qui est nécessaire pour un traitement d'échappement, un contrôle d'injection pour une prévention d'obstruction qui prévient l'obstruction d'une ouverture de buse de la vanne d'alimentation en agent réducteur (15) par injection intermittente d'une quantité plus faible d'agent réducteur à partir de la vanne d'alimentation en agent réducteur (15) en comparaison avec la quantité d'agent réducteur qui est nécessaire pour un traitement d'échappement,
**caractérisé en ce que**
ledit dispositif de contrôle de commande de pompe électrique (70) est mis au point de sorte qu'il interrompt la pompe électrique (60) lorsqu'il existe une demande d'interruption de la pompe électrique (60) pendant le fonctionnement du moteur, et **en ce que**
ledit dispositif de contrôle d'injection d'agent réducteur (30) est mis au point de sorte que, lorsque la pompe électrique (60) est arrêtée, ledit dispositif de contrôle d'injection d'agent réducteur (30) injecte de manière intermittente la quantité d'agent réducteur qui est nécessaire pour une prévention d'obstruction dans l'état où la pompe électrique (60) est arrêtée jusqu'à ce que la pression d'injection de la vanne d'alimentation en agent réducteur (15) chute en dessous d'une pression d'injection permise prédéterminée qui est inférieure à ladite pression d'injection ciblée ou un nombre d'injections de la vanne d'alimentation en agent réducteur (15) après que la pompe électrique (60) s'arrête devienne égal ou supérieur à un nombre d'injections prédéterminé.

2. Système de purification d'échappement d'un moteur à combustion interne selon la revendication 1, dans lequel une différence entre ladite pression d'injection ciblée et ladite pression d'injection permise est plus de deux fois une quantité de chute de pression d'injection par injection à partir de la vanne d'alimentation en agent réducteur (15) lorsque la pompe électrique (60) est arrêtée.

3. Système de purification d'échappement d'un moteur à combustion interne selon la revendication 1, dans lequel ledit dispositif de contrôle d'injection d'agent réducteur (30) est mis au point de sorte que, lorsque la pompe électrique (60) est arrêtée, le dispositif de contrôle d'injection d'agent réducteur (30) injecte de manière intermittente la quantité d'agent réducteur qui est nécessaire pour une prévention d'obstruction dans l'état où la pompe électrique (60) est arrêtée jusqu'à ce que deux injections ou plus sont réalisées à partir de la vanne d'alimentation en agent réducteur (15) après que la pompe électrique (60) s'arrête.

4. Système de purification d'échappement d'un moteur à combustion interne selon la revendication 1, dans lequel le dispositif de contrôle de commande de pompe électrique (70) est mis au point de sorte que, lorsqu'en injectant de manière intermittente la quantité d'agent réducteur qui est nécessaire pour une prévention d'obstruction dans l'état où la pompe électrique (60) est arrêtée, si la pression d'injection de la vanne d'alimentation en agent réducteur (15) chute en dessous de ladite pression d'injection permise ou le nombre d'injections de la vanne d'alimentation en agent réducteur (15) devient égal ou supérieur au nombre d'injections prédéterminé, la pompe électrique (60) est commandée de manière temporaire jusqu'à ce que la pression d'injection de la vanne d'alimentation en agent réducteur (15) atteigne ladite pression d'injection ciblée.

5. Système de purification d'échappement d'un moteur à combustion interne selon la revendication 1, dans lequel le dispositif de contrôle de commande de pompe électrique (70) est mis au point de sorte que, si l'action d'injection de la quantité d'agent réducteur qui est nécessaire pour ledit traitement d'échappement est arrêtée, la pompe électrique (60) est arrêtée.

6. Système de purification d'échappement d'un moteur à combustion interne selon la revendication 5, dans lequel le dispositif de contrôle de commande de pompe électrique (70) est mis au point de sorte que, si l'action d'injection de la quantité d'agent réducteur qui est nécessaire pour un traitement d'échappement est arrêtée, la pompe électrique (60) est arrêtée après avoir attendu que la pression d'injection de la vanne d'alimentation en agent réducteur (15) atteigne la pression d'injection ciblée.

7. Système de purification d'échappement d'un moteur à combustion interne selon la revendication 1, dans lequel ledit dispositif de contrôle de commande de pompe électrique (70) est mis au point de sorte qu'il démarre la commande de la pompe électrique (60) lorsqu'un catalyseur de purification d'échappement (13) disposé dans le passage d'échappement de moteur (12) est activé et arrête la pompe électrique (60) lorsque ledit catalyseur de purification d'échappement (13) devient l'état inactif.

8. Système de purification d'échappement d'un moteur à combustion interne selon la revendication 1, dans lequel :
ledit agent réducteur est constitué d'hydrocarbures,
ladite vanne d'alimentation en agent réducteur (15) est constituée d'une vanne d'alimentation en hydrocarbures,
un catalyseur de purification d'échappement (13) est disposé dans le passage d'échappement de moteur (12) en aval de ladite vanne d'alimentation en hydrocarbure,
un catalyseur de métal précieux (51) est supporté sur une surface d'écoulement de gaz d'échappement du catalyseur de purification d'échappement (13),
une couche basique (53) est formée autour du catalyseur de métal précieux (51),
le système de purification d'échappement étant mis au point de sorte que
un premier procédé d'élimination de NOx qui réduit NOx contenu dans les gaz d'échappement par un intermédiaire réducteur qui est maintenu sur la couche basique (53) et produit par injection d'hydrocarbures à partir de la vanne d'alimentation en hydrocarbures dans un intervalle de période prédéterminé et un second procédé d'élimination de NOx dans lequel un rapport air-combustible des gaz d'échappement s'écoulant dans le catalyseur de purification d'échappement (13) est enrichi par une période qui est plus longue que ledit intervalle prédéterminé pour faire en sorte que le NOₓ qui est stocké dans le catalyseur de purification d'échappement (13) lorsque le rapport air-combustible des gaz d'échappement est appauvri soit libéré du catalyseur de purification d'échappement (13) sont utilisés,
un procédé d'élimination de NOx est commuté du second procédé d'élimination de NOx au premier procédé d'élimination de NOx lorsque le catalyseur de purification d'échappement (13) s'élève en température, dans lequel le dispositif de contrôle de commande de pompe électrique (70) est mis au point pour démarrer la pompe électrique (60) à commander lorsque le procédé d'élimination de NOx est commuté du second procédé d'élimination de NOx au premier procédé d'élimination de NOx, et pour arrêter la pompe électrique (60) lorsque le procédé d'élimination de NOx est commuté du premier procédé d'élimination de NOx au second procédé d'élimination de NOx.
